(19) **Europäisches Patentamt**

**European Patent Office**

**Office européen des brevets**

(11) **EP 1 138 867 B1**

(12) **EUROPEAN PATENT SPECIFICATION**

(45) Date of publication and mention
of the grant of the patent:
**04.10.2006 Bulletin 2006/40**

(51) Int Cl.:
*E06C 5/44* (2006.01)    *B25J 9/16* (2006.01)

(21) Application number: **01107294.9**

(22) Date of filing: **23.03.2001**

(54) **Turntable ladder**

Drehleiter

Echelle orientable

(84) Designated Contracting States:
**AT BE CH CY DE DK ES FI FR GB GR IE IT LI LU
MC NL PT SE TR**

(30) Priority: **31.03.2000 DE 10016137**

(43) Date of publication of application:
**04.10.2001 Bulletin 2001/40**

(73) Proprietor: **IVECO MAGIRUS AG
D-89070 Ulm (DE)**

(72) Inventors:
• **Sawodny, Oliver
89278 Nersingen (DE)**
• **Aschemann, Harald
73340 Amstetten (DE)**
• **Hofer, E. P.
89173 Lonsee (DE)**

(74) Representative: **Gervasi, Gemma et al
Notarbartolo & Gervasi S.p.A.,
Corso di Porta Vittoria, 9
20122 Milano (IT)**

(56) References cited:
**EP-A- 0 206 940      FR-A- 2 670 705**

**Description**

The invention relates to a turntable ladder or the like with a control for the movement of the ladder parts.

In particular, the invention relates to a turntable ladder, for example a fire brigade ladder or a similar device, such as articulated platforms or telescopic mast platforms and turntable ladder devices. Such devices are generally rotatable about a vertical axis and furthermore are mounted on a vehicle so as to be raisable in relation to the horizontal. The turntable ladder and in particular a cage attached to the end of the turntable ladder is moved with the aid of a control, by means of which the cage is moved in the work environment. Of course it is also desirable that the cage reaches its target position as quickly as possible. A relatively high movement velocity of the cage requires corresponding acceleration and deceleration phases. As a result, and owing to external influences, such as wind load, oscillating movements and vibrations of the ladder can occur.

The control of turntable ladders of the type under consideration here, generally comprises hand levers with which the movements of the individual ladder parts can be controlled electro-hydraulically or hydraulically directly. In the case of purely hydraulic control, the hand lever deflection is directly converted into a proportional control signal for a proportional valve of the corresponding drive. In this case, damping valves can serve to make the movements less jerky and more smooth in transition. This frequently leads to strongly damped adjustments with sluggish response behaviour.

In electrohydraulic controls, an electric signal which is further processed in a control device with microprocessor and is finally used to control a hydraulic proportional valve is initially produced by the hand lever. In this case, the electrical signal can be damped by ramp functions so the movement of the turntable ladder is less jerky and more smooth. The steepness of the ramp function determines the damping behaviour and, on the other hand is the measure for the response behaviour.

Provided the known ladders have damping elements this generally means a relatively coarse compromise between the demands of vibration damping and a rapid response behaviour

For example, it is known from FR-A-2670705 a method for the control of a mechanical system such as a robot arm, wherein there is calculated a digital dynamic model of the system, obtaining then a control model on a trajectory, and elaborating in real time the digital controls of the actuators. The invention allows to avoid disturbing oscillations of a servo-controlled mechanical system with flexible elements. According to this document, the differential equations for describing the movement of the model only include some variables relevant to such movement, and does not consider at all a damping vector relevant to the movement of the arm.

On the other hand, in EP-A-0206940 a method for the controlling of the movements of a vehicle-mounted ladder, particularly a rescue and firefighting ladder, is disclosed. The method is characterised in that it involves calculating from the signals of sensors a first speed coefficient which is a decreasing function of the developed length of the ladder, a second coefficient which is a decreasing function of the effective load, and a third coefficient which is a decreasing function of the slewing radius of the ladder. According to this document, there is no provision of the suppression of the vibrations of the ladder via a feed back of the calculated values of the horizontal and vertical bending of the ladder to the control inputs of the drives.

The object of the invention is to create a turntable ladder or the like of the above type which has a path control which allows the cage of a ladder to move relatively quickly on a preset path and with active damping of vibrations which occur.

This object is achieved according to the invention by a turntable ladder as defined in claim 1. The invention is essentially characterised in that the control is designed in such a way that the idealised movement behaviour of the ladder is mapped in a dynamic model based on differential equations and the pilot control calculates the control variables of the drives of the ladder parts for a substantially vibration-free movement of the ladder from the dynamic model.

A path planning module and a pilot control block are provided as parts of the control. The path planning module produces a movement path of the ladder in the work environment which is passed in the form of time functions for the cage position, cage velocity, cage acceleration, cage jerk and possibly the derivative of the cage jerk to the pilot control block which in turn controls the drives of the ladder parts.

The path planning module preferably allows input of kinematic restrictions for the time functions of cage position, cage velocity, cage acceleration and cage jerk. The path planning module can also form the derivation of the function of the jerk.

The path planning module preferably has steepness limiters in order to take into account the kinematic restrictions.

The path planning module preferably produces a constant function of the jerk from which the time functions for cage acceleration, cage velocity and cage position can be determined by integration. As the jerk provides the critical state in the movement of the ladder, it is ensured when determining the function of the jerk and deriving the other time functions from this jerk that an acceptable, largely vibration-free movement of the ladder is produced overall.

According to the invention, the drives for the individual ladder parts comprise hydraulic proportional valves which can be controlled electrically. These drives serve to rotate the ladder about the vertical axis, to elevate and lower the ladder, to run-out and run-in the ladder in its length, optionally also for inclination compensation if the vehicle supporting the ladder is standing on inclined ground.

The path control is designed in a modular fashion. It comprises a path planning module and the axis controller modules. The axis controller module can be present in various expansion stages. The basic expansion stage comprises only the pilot control. In the next expansion stage, the pilot control is combined with the status controller.

There are two alternatives available as path planning module. The path planning module for semi-automatic operation in which the turntable ladder is controlled by the hand lever in the operating state and the path planning module for fully automatic operation in which the turntable ladder independently covers the set path defined in a matrix without operator intervention.

Preferred embodiments of the invention will be described in more detail below with the aid of the attached drawings, in which:

Fig. 1 shows the basic mechanical structure of a turntable ladder by way of example

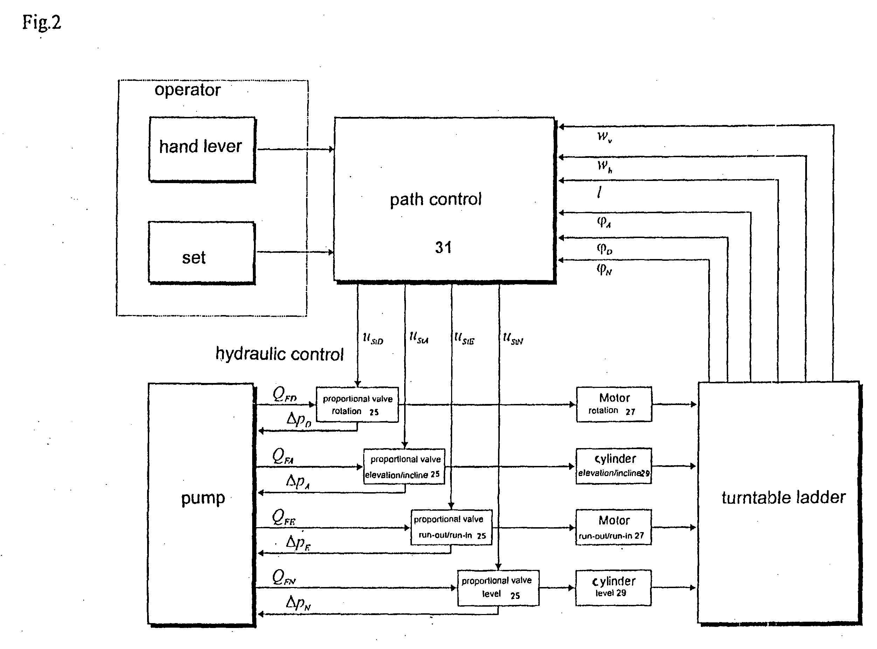

Fig. 2 shows interaction of hydraulic control and path control

Fig. 3 shows the entire structure of the path control

Fig. 4 shows the structure of the path planning module

Fig. 5 shows path generation with the fully automatic path planning module by way of example

Fig. 6 shows the structure of the semi-automatic path planning module

Fig. 7 shows the structure of the axis controller for the axis of rotation

Fig. 8 shows the mechanical structure of the axis of rotation and definition of model variables

Fig. 9 shows the structure of the axis controller of the axis of elevation

Fig. 10 shows the mechanical structure of the axis of elevation and definition of model variables

Fig. 11 shows elevation kinematics of the axis of elevation

Fig. 12 shows the structure of the axis controller of the run-out axis

Fig. 13 shows the structure of the axis controller of the level axis.

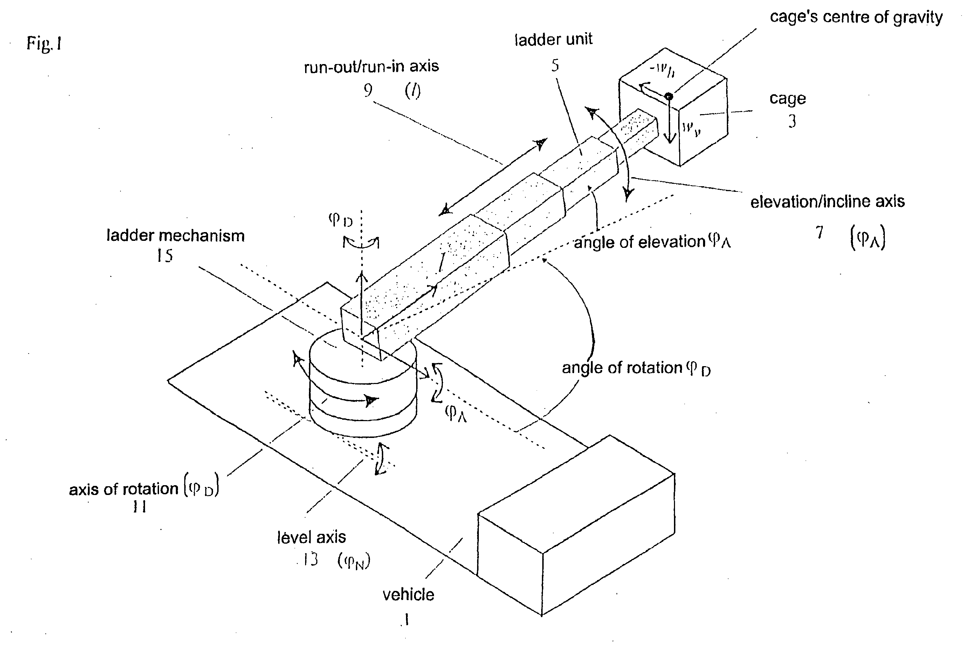

Fig. 1 shows the basic mechanical structure of a turntable ladder or the like. The turntable ladder is generally mounted on a vehicle 1. To position the cage 3 in the work environment, the ladder unit 5 can be tilted with the axis elevation/incline 7 by the angle $\varphi_A$. The ladder length 1 can be varied with the axis run-out/run-in 9. The axis rotation 11 allows orientation by the angle $\varphi_D$ about the vertical axis. In the case of a vehicle which is not standing horizontally, an undesirable additional incline can be compensated with the level axis 13 upon rotation of the ladder unit by tilting the ladder mechanism 15 by the angle $\varphi_N$.

Generally, the turntable ladder has a hydraulic drive system 21. It consists of the hydraulic pump 23 driven by the travel motor, the proportional valves 25 and the hydraulic motors 27 and hydraulic cylinders 29. The hydraulic control is generally equipped with systems with subordinate conveying power control for the hydraulic circuits with load-sensing properties. It is essential in this case that the control voltages $u_{StD}$, $U_{StA}$, $u_{StN}$, $u_{StE}$ at the proportional valves are converted by the subordinate conveying power control into proportional conveying powers $Q_{FD}$, $Q_{FA}$, $Q_{FN}$, $Q_{FE}$ in the corresponding hydraulic circuit.

It is accordingly essential that the time functions for the control voltages of the proportional valves are no longer derived directly from the hand levers, for example by ramp functions, and passed to the control inputs but are calculated in the path control 31 in such a way that no vibrations occur when the ladder is moved and the cage follows the desired path in the work environment.

The basis for this is a dynamic model of the turntable ladder system with the aid of which this object is achieved based on the sensor data of at least one of the variables $w_v$, $w_h$, 1, $\varphi_D$, $\varphi_N$ and the guide presets $\dot{q}_{target}$ or $q_{target}$.

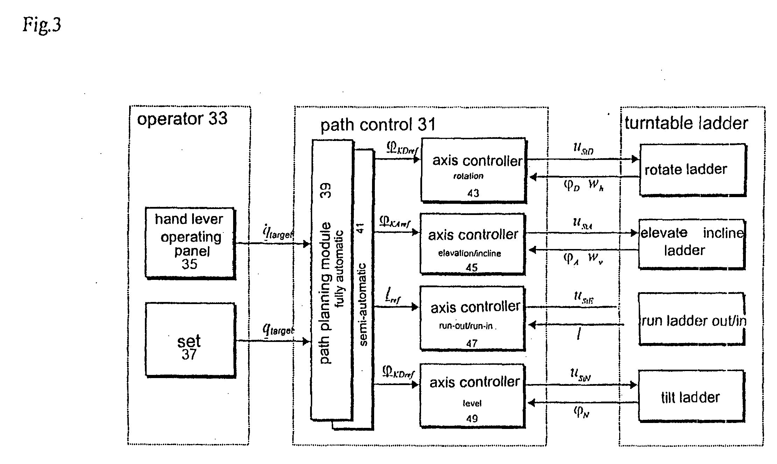

Initially, the entire structure (Fig. 3) of the path control 31 will be explained below.

The operator preselects the target speeds or the destinations either via the hand lever 35 at the operating panels or via a set matrix 37 which was stored in the computer in a previous turntable run. By taking into account the kinematic restrictions (maximum velocity, acceleration and jerk) of the turntable ladder the fully automatic or semi-automatic path planning module (39 or 41) calculates the time functions of the set cage position with regard to the rotational, elevation and run-out axis and their derivations combined in the vectors $\underline{\varphi}_{KDref}$, $\underline{\varphi}_{KAref}$, $\underline{l}_{ref}$. The set position vectors are passed to the axis controllers 43, 45, 47 and 49 which calculate the control functions $u_{StD}$, $u_{StA}$, $u_{StE}$, $u_{StN}$ for the proportional valves 25 of the hydraulic drive system 21 therefrom by evaluating at least one of the sensor values $w_v$, $w_h$, 1, $\varphi_A$, $\varphi_D$, $\varphi_N$.

The individual components of the path control will now be described hereinafter in more detail.

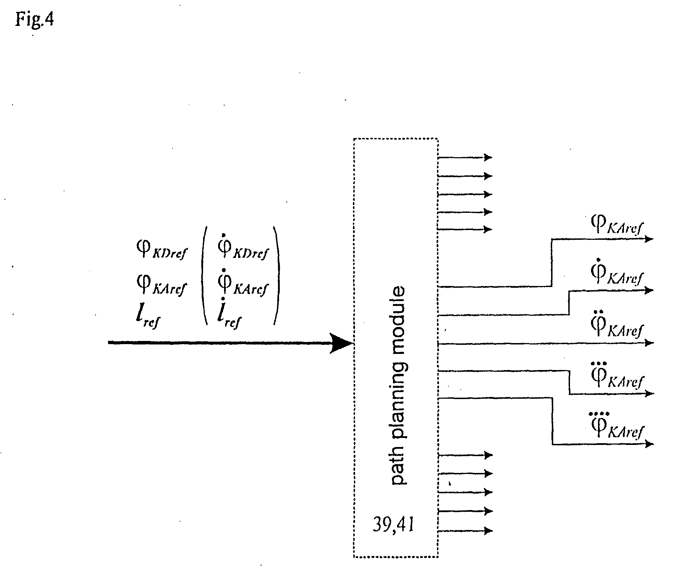

Fig. 4 shows the interfaces of the path planning module 39 or 41. In the case of the fully automatic path planning module 39, the target position vector for the centre of the cage is input in the form of coordinates $\underline{q}_{target}=[\varphi_{KDtarget}, \varphi_{KAtarget}, l_{target}]^T$. $\varphi_{KDtarget}$ is the target angle coordinate in the direction of the axis of rotation 11 for the centre of the cage. $\varphi_{KAtarget}$ is the target angle coordinate in the direction of the elevation/incline axis 7 for the centre of the cage. $l_{target}$ is the target position in the direction of the run-out/in axis 9 for the centre of the cage. In the case of the semi-automatic path planning module 41, the target velocity vector $\dot{\underline{q}}_{targer} = [\dot{\varphi}_{KDtarger}, \dot{\varphi}_{KDtarger}, \dot{i}_{target}]^T$ is input variable. The components of the target velocity vector are similar to those of target position vector: the target velocity in the direction of the axis of rotation $\dot{\varphi}_{KDtarget}$, following the target velocity of the elevation/incline axis $\dot{\varphi}_{KAtarget}$ and the run-out or run-in velocity of the ladder unit $\dot{i}_{target}$. The time function vectors for the cage position in relation to the angle of rotation coordinate and its derivatives $\underline{\varphi}_{KDref}$, for the cage position in relation to the angle of elevation coordinate and its derivatives $\underline{\varphi}_{KAref}$ and for the cage position in relation to the run-out length and its derivatives $\underline{l}_{Kref}$ are calculated from these preset variables in the path planning module 39 or 41. Each vector comprises a maximum of five components up to the fourth derivative. In the case of the elevation/incline axis, the individual components are:

$\varphi_{KAref}$:      set angle position centre of cage in the direction of angle of elevation

$\dot{\varphi}_{KAref}$:      set angular velocity centre of cage in the direction of angle of elevation

$\ddot{\varphi}_{KAref}$:      set angular acceleration centre of cage in the direction of angle of elevation

$\dddot{\varphi}_{KAref}$:      set jerk centre of cage in the direction of angle of elevation

$\ddddot{\varphi}_{KAref}$:      derivative set jerk centre of cage in the direction of angle of elevation

The vectors for the axis of rotation and run-out are established in the same way.

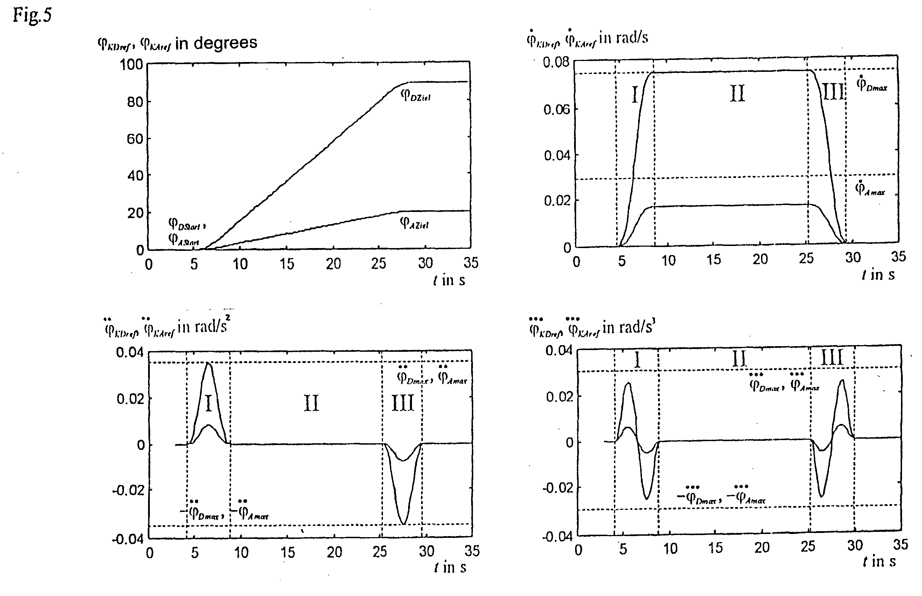

Fig. 5 shows, by way of example, the generated time functions for the set angle positions $\varphi_{KD}$, $\varphi_{KA}$, set angular velocities $\dot{\varphi}_{KD}$, $\dot{\varphi}_{KA}$, set angular accelerations $\ddot{\varphi}_{KD}$, $\ddot{\varphi}_{KA}$ and set jerk $\dddot{\varphi}_{KD}$, $\dddot{\varphi}_{KA}$ from the fully automatic path planning module for a movement with the axis of rotation and elevation/incline from the starting point $\varphi_{KDstart} = 0°$, $\varphi_{KAstart} = 0°$ to the destination $\varphi_{KDtarget} = 90°$, $\varphi_{KAtarget} = 20°$. The time functions are calculated in this case such that none of the preset kinematic restrictions, such as the maximum angular velocities $\dot{\varphi}_{Dmax}$, $\dot{\varphi}_{Amax}$, the maximum angular accelerations $\ddot{\varphi}_{Dmax}$, $\ddot{\varphi}_{Amax}$ or the maximum jerk $\dddot{\varphi}_{Dmax}$, $\dddot{\varphi}_{Amax}$ is exceeded. For this purpose, the movement is divided into three phases: an acceleration phase I, a phase of constant velocity II, which can also be dispensed with, and a deceleration phase III. A polynomial of the third order is assumed for the phases I and III as time function for the jerk. A constant velocity is always assumed as time function for the phase II. By integrating the jerk function, the missing time functions for the acceleration, velocity and position are calculated. The coefficients in the time functions which are still vacant are determined by the marginal conditions at the start of the movement, at the transition points to the next or preceding movement phase or at the destination, and the kinematic restrictions, wherein all kinematic conditions must be checked in relation to each axis. In the case of the example in Fig. 5, the kinematic restriction of the maximum acceleration for the axis of rotation $\ddot{\varphi}_{Dmax}$ acts in a limiting fashion in phase I and III, in phase II it is the maximum velocity of the axis of rotation $\dot{\varphi}_{Dmax}$. The other axes are synchronised with the axis limiting the movement in view of the duration of travel. The time optimality of the movement is achieved in that the minimum total duration of travel is determined in an optimisation sequence by varying the proportion of the acceleration and deceleration phase to the entire movement.

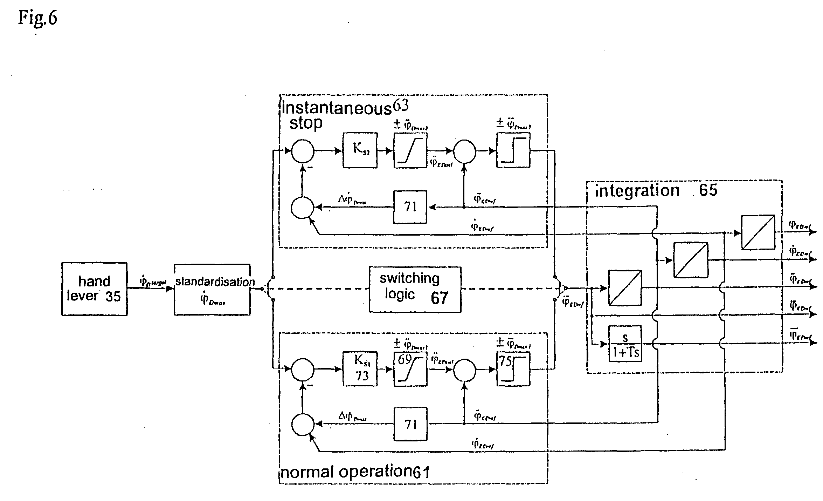

Fig. 6 shows the detail relating to the axis of rotation from the structure of the semi-automatic path planner. The target velocity of the cage $\dot{\varphi}_{KDtarget}$ is initially standardised to the value range of the maximum achievable velocity $\dot{\varphi}_{Dmax}$ by the hand lever of the operating panel. As a result, the maximum velocity is not exceeded. The semi-automatic path planner consists of two steepness limiters of the second order per axis, one for normal operation 61 and one for instantaneous stop 63, between which the switching logic 67 can be switched back and forth. The time functions at the output are formed by integration 65. The signal flow in the semi-automatic path planner will now be described with the aid of Fig. 6.

A set value-actual value difference between the target velocity $\dot{\varphi}_{KDtarget}$ and the current set velocity $\dot{\varphi}_{KDref}$ is initially formed in the steepness limiter for normal operation 61. The difference is intensified by the constants $K_{S1}$ (block 73) and produces the target acceleration $\ddot{\varphi}_{KDtarget}$. A limiting member 69 connected downstream, limits the value to the maximum acceleration $\pm \ddot{\varphi}_{Dmax}$. In order to improve the dynamic behaviour, it is taken into account when forming the set-actual value difference between target velocity and current set velocity that only the maximum change in velocity

$$\Delta \dot{\varphi}_{D\max} = \frac{\ddot{\varphi}_{KDref} \left| \ddot{\varphi}_{KDref} \right|}{2\ddot{\varphi}_{D\max}} \tag{1}$$

which is calculated in block 71 can be achieved owing to the jerk limitation $\pm \dddot{\varphi}_{Dmax}$ at the current set acceleration $\ddot{\varphi}_{KDref}$. Therefore, this value is added to the current set velocity $\dot{\varphi}_{KDref}$, whereby the dynamics of the entire system is improved. The target acceleration $\ddot{\varphi}_{KDtarget}$ is then behind the limiting element 69. A set-actual value difference is in turn formed with the current set acceleration $\ddot{\varphi}_{KDref}$. The set jerk $\dddot{\varphi}_{KDref}$ in accordance with

$$\dddot{\varphi}_{KDref} = \begin{cases} +\dddot{\varphi}_{D\max} & for \ \ddot{\varphi}_{KDt\arg et} - \ddot{\varphi}_{KDref} > 0 \\ 0 & for \ \ddot{\varphi}_{KDt\arg et} - \ddot{\varphi}_{KDref} = \dot{0} \\ -\dddot{\varphi}_{D\max} & for \ \ddot{\varphi}_{KDt\arg et} - \ddot{\varphi}_{KDref} < 0 \end{cases} \tag{2}$$

is formed therefrom in characteristic block 75. The block-shaped characteristic of this function is attenuated by filtration. The set acceleration $\ddot{\varphi}_{KDref}$, the set velocity $\dot{\varphi}_{KDref}$, and the set position $\varphi_{KDtarget}$ are determined by integration in block 65 from the just calculated set jerk function $\dddot{\varphi}_{KDref}$. The derivative of the set jerk is determined by differentiation in block 65 and simultaneous filtration from the set jerk $\dddot{\varphi}_{KDref}$.

During normal operation, the kinematic restrictions $\ddot{\varphi}_{Dmax}$ and $\dddot{\varphi}_{Dmax}$ and the proportional intensification $K_{S1}$ are input such that a subjectively pleasant and smooth dynamic mode of behaviour is produced for the passenger in the cage when the turntable ladder is actuated. This means that maximum jerk and acceleration are set so as to be somewhat lower than the mechanical system would allow. However, the after-run of the system is high, in particular at high velocities of travel. In other words, if the operator inputs the target velocity 0 at full velocity, the turntable ladder then requires a few seconds until it comes to a standstill. As such inputs are made, in particular, in an emergency where there is a threat of collision, a second operating mode is introduced which provides an instantaneous stop of the turntable ladder. For this purpose, a second steepness limiter 63, which has an identical design in terms of structure, is connected in parallel with the steepness limiter for normal operation 61. However, the parameters which determine the after-run are increased up to the mechanical loadability limits of the turntable ladder. Therefore, this steepness limiter is parameterised with the maximum instantaneous stop acceleration $\ddot{\varphi}_{Dmax2}$ and the maximum instantaneous stop jerk $\dddot{\varphi}_{Dmax2}$ and the instantaneous stop proportional intensification $K_{S2}$. A switching logic 67 switches back and forth between the two steepness limiters, which circuit identifies the emergency stop from the hand lever signal. The output of the instantaneous stop steepness limiter 63 is, as with the steepness limiter for normal operation, the set jerk $\dddot{\varphi}_{KDref}$. The other time functions are calculated in the same way as in normal operation in block 65.

As a result, by taking into account the kinematic restrictions, the time functions for the set position of the cage in the direction of rotation and its derivative are present at the output of the semi-automatic path planner as in the fully automatic path planner.

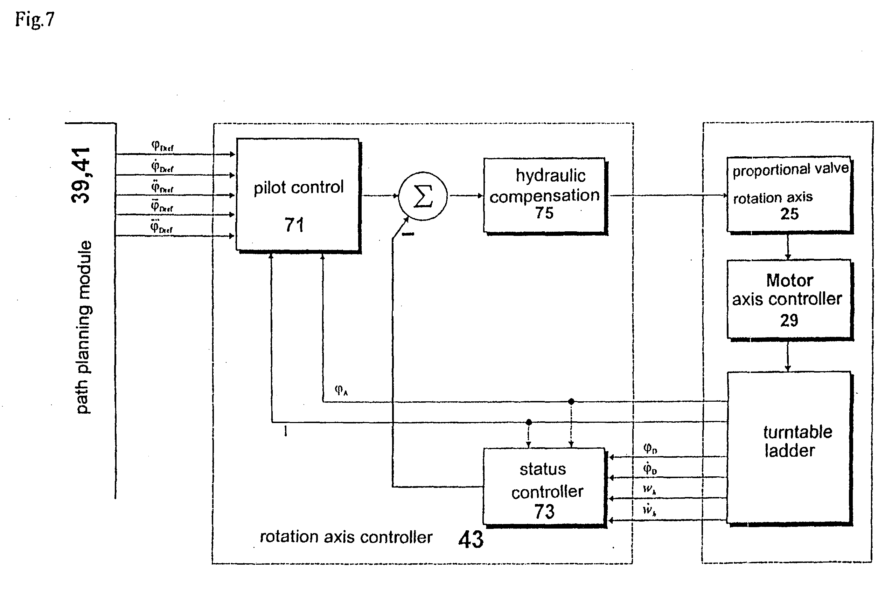

The time functions are passed to the axis controller. Initially, the structure of the axis controller for the axis of rotation will be described with the aid of Fig. 7.

The output functions of the path planning module in the form of set cage position in the direction of rotation and its derivatives (velocity, acceleration, jerk and derivative of the jerk) are passed to the pilot control block 71. In the pilot control block these functions are intensified in such a way that path-accurate travel of the ladder without vibrations results under the idealised preconditions of the dynamic model. The basis for determining the pilot control intensifications is the dynamic model which is derived in the subsequent sections for the axis of rotation. Therefore, vibration of the turntable ladder is suppressed under these idealised preconditions and the cage follows the path generated.

As disturbances such as wind influences can act on the turntable ladder however, and the idealised model can only reproduce the real dynamic conditions present in partial aspects, the pilot control can optionally be supplemented by a status controller block 73. At least one of the measured variables: angle of rotation $\varphi_D$, angle of rotation velocity $\dot{\varphi}_D$, bending of the ladder unit in the horizontal direction (direction of rotation) $w_h$ or the derivative of the bending $\dot{w}_h$ is intensified in this block and fed back again to the control input. The derivation of the measured variables $\varphi_D$ and $w_h$ is formed numerically in the microprocessor control.

As the hydraulic drive units are characterised by non-linear dynamic properties (hysteresis, play), the value for the control input $u_{Dref}$ formed from pilot control and optionally status controller output is altered in the hydraulic compensation block 75 in such a way that linear behaviour of the entire system can be assumed. The output of the block 75 (hydraulic compensation) is the corrected control variable $u_{StD}$. This value is then passed to the proportional valve of the hydraulic circuit for the axis of rotation.

The derivation of the dynamic model for the axis of rotation will now serve to explain the mode of operation in detail, which derivation is the basis for calculating the pilot control intensifications and the status controller.

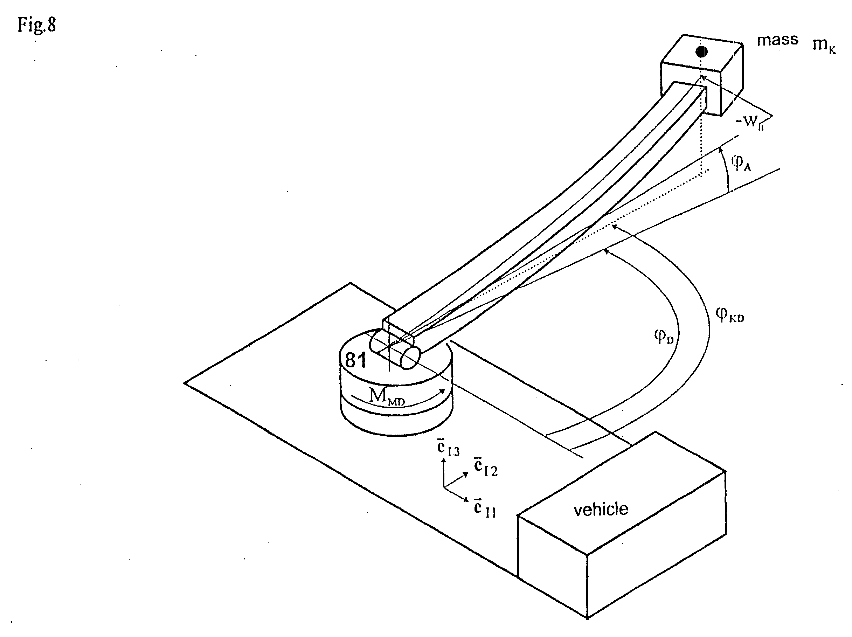

For this purpose, Fig. 8 provides descriptions for the definition of the model variables. The connection shown there between the position of rotation $\varphi_D$ of the ladder mechanism in relation to the inertial system with the unit vectors $\underline{e}_{11}$ to $\underline{e}_{13}$ and the cage position of rotation $\varphi_{KD}$, which, owing to bending $w_h$, is calculated in accordance with the equation

$$\varphi_{KD} = \varphi_D - \frac{w_h}{l} \qquad (3)$$

for small bends, is essential in this case. 1 is the ladder length here. This dynamic system can be described by the following differential equations

$$(J_D(l) + m_k l^2) \cos^2\varphi_A \cdot \ddot{\varphi}_D - ml\cos\varphi_A \cdot \ddot{w}_h = M_{MD} - b_D \dot{\varphi}_D$$

$$-ml\cos\varphi_A \cdot \ddot{\varphi}_D + m \cdot \ddot{w}_h + b_{DL} \cdot \dot{w}_h + c_{DL}(l) \cdot w_h = 0 \qquad (4)$$

$J_D$ is the moment of inertia of the ladder mechanism and the ladder unit about the axis of rotation. $m_K$ is the mass of the cage, m is the reduced mass which is produced from the model observation that the homogenous mass distribution of the ladder unit is reduced to two point masses. The one point mass is reduced on the centre of rotation in the ladder mechanism, the second point mass is the centre of the cage. Accordingly, the reduced mass is calculated from the total mass of the ladder unit $m_L$ in accordance with $m = m_L \alpha$. The parameter $\alpha$ is determined from frequency response measurements. $M_{MD}$ is the driving motor torque. $b_D$ is the viscous friction of the turntable drive. The first equation of (4) substantially describes the movement equation for the turntable ladder mechanism, the reaction owing to bending of the ladder unit on the turntable ladder mechanism being taken into account. The second equation of (4) is the movement equation which describes the bending $w_h$, stimulation of the bending vibration being caused by rotation of the ladder unit via the angular acceleration of the turntable ladder mechanism or an external disturbance, expressed by initial conditions for these differential equations. In the second equation of (4) the parameter $C_{DL}$ is the stiffness of the ladder unit and $b_{DL}$ the damping constant for the ladder vibration. A function is calculated for the stiffness as a function of 1 from FEM simulations as this stiffness is highly dependent on the run-out state of the ladder unit 1. Therefore, $c_{DL}(l)$ is always to be assumed hereinafter for $c_{DL}$. This also applies to the moment of inertia $J_D$ calculated from constructional data which is also a function dependent on 1.

The hydraulic drive is described by the following equations.

$$M_{MD} = i_D \frac{V}{2\pi} \Delta p_D \qquad \Delta \dot{p}_D = K_{compr} \dot{Q}_{CD}$$

$$Q_{CD} = Q_{FD} - i_D \frac{V}{2\pi} \dot{\varphi}_D$$

$$Q_{FD} = K_{PD} u_{StD} \qquad K_{compr} = \frac{1}{V\beta} \qquad (5)$$

$i_D$ is the transmission ratio between motor velocity and rotational velocity of the ladder mechanism. V is the absorption volume of the hydraulic motor. $\Delta p_D$ is the pressure drop across the hydraulic drive motor, $\beta$ is the oil compressibility, $Q_{CD}$ is the compressibility power, $Q_{FD}$ is the conveying power in the hydraulic circuit for rotation and $K_{PD}$ is the proportionality constant which produces the connection between conveying power and control voltage of the proportional valve. Dynamic effects of the subordinate conveying power control are ignored.

The equations can now be transformed into a status representation (see also O. Föllinger: Regelungstechnik, [Control Engineering], 7th Edition, Hüthig Verlag, Heidelberg, 1992). The following status representation of the system is produced:

status representation:

$$\dot{\underline{x}}_D = \underline{A}_D \underline{x}_D + \underline{B}_D \underline{u}_D$$

$$\underline{y}_D = \underline{C}_D \underline{x}_D \qquad (6)$$

with:

status vector:

$$\underline{x}_D = \begin{bmatrix} w_h \\ \dot{w}_h \\ \varphi_D \\ \dot{\varphi}_D \\ M_{MD} \end{bmatrix} \qquad (7)$$

control variable:

$$\underline{u}_D = u_{StD} \qquad (8)$$

output variable:

$$\underline{y}_D = \varphi_{KD} \qquad (9)$$

system matrix:

$$\underline{A}_D = \begin{bmatrix} 0 & 1 & 0 & 0 & 0 \\ -\dfrac{c_{DL}J_{DK}}{m(J_{DK}-ml^2)} & -\dfrac{b_{DL}J_{DK}}{m(J_{DK}-ml^2)} & 0 & -\dfrac{b_D l}{\cos\varphi_A(J_{DK}-ml^2)} & \dfrac{l}{\cos\varphi_A(J_{DK}-ml^2)} \\ 0 & 0 & 0 & 1 & 0 \\ -\dfrac{c_{DL}l}{\cos\varphi_A(J_{DK}-ml^2)} & -\dfrac{b_{DL}l}{\cos\varphi_A(J_{DK}-ml^2)} & 0 & -\dfrac{b_D}{\cos^2\varphi_A(J_{DK}-ml^2)} & \dfrac{1}{\cos^2\varphi_A(J_{DK}-ml^2)} \\ 0 & 0 & 0 & -i_D^2\dfrac{V}{4\pi^2\beta} & 0 \end{bmatrix}$$

$$J_{DK}(l) = J_D(l) + m_K l^2 \tag{10}$$

control vector:

$$\underline{B}_D = \begin{bmatrix} 0 \\ 0 \\ 0 \\ 0 \\ \dfrac{i_D K_{PD}}{2\pi\beta} \end{bmatrix} \tag{11}$$

output vector:

$$\underline{C}_D = \begin{bmatrix} -\dfrac{1}{l} & 0 & 1 & 0 & 0 & 0 \end{bmatrix} \tag{12}$$

The dynamic model of the axis of rotation is regarded as a variable-parameter system in relation to the run-out length 1 and the angle of elevation $\varphi_A$. The equations (6) to (12) are the basis for the design of the pilot control 71 and the status controller 73 now described.

Input variables of the pilot control block 71 are the set angle position $\varphi_{KDref}$, the set angular velocity $\dot{\varphi}_{KDref}$, the set angular acceleration $\ddot{\varphi}_{KDref}$, the set jerk $\dddot{\varphi}_{KDref}$ and optionally the derivative of the set jerk. The reference variable $\underline{w}_D$ is therefore

$$\underline{w}_D = \begin{bmatrix} \varphi_{KDref} \\ \dot{\varphi}_{KDref} \\ \ddot{\varphi}_{KDref} \\ \dddot{\varphi}_{KDref} \\ \left(\ddddot{\varphi}_{KDref}\right) \end{bmatrix} \tag{13}$$

The components of $\underline{W}_D$ are weighted with the pilot control intensifications $K_{VD0}$ to $K_{VD4}$ in the pilot control block 71 and their sum is passed to the control input. In the event that the axis controller for the axis of rotation does not comprise a status controller block 73, the variable $u_{Dpilot}$ from the pilot control block is then the reference control voltage $u_{Dref}$ which is passed as control voltage $u_{StD}$ to the proportional valve after compensation of the hydraulics non-linearity. The status representation (6) is expanded as a result to

$$\dot{\underline{x}}_D = \underline{A}_D \underline{x}_D + \underline{B}_D \underline{S}_D \underline{w}_D$$

$$\underline{Y}_D = \underline{C}_D \underline{x}_D \qquad (14)$$

by the pilot control matrix

$$\underline{S}_D = [K_{VD0} \ k_{VD1} \ K_{VD2} \ K_{VD3} \ K_{VD4}] \qquad (15)$$

If the matrix equation (14) is evaluated then it can be written as algebraic equation for the pilot control block, wherein $U_{Dpilot}$ is the uncorrected set control voltage for the proportional valve based on the idealised model.

$$u_{Dpilot} = K_{VD0}\varphi_{KDref} + K_{VD1}\dot{\varphi}_{KDref} + K_{VD2}\ddot{\varphi}_{KDref} + K_{VD3}\dddot{\varphi}_{KDref} \ (+K_{VD4}\ddddot{\varphi}_{KDref}) \qquad (16)$$

$K_{VD0}$ to $K_{VD4}$ are the pilot control intensifications which are calculated as a function of the current angle of elevation $\phi_A$ and the run-out length 1 of the ladder unit such that the cage follows the set trajectory path-accurately without vibrations.
The pilot control intensifications $K_{VD0}$ to $K_{VD4}$ are calculated as follows. In relation to the cage angle $\varphi_{KD}$ control variable, the transmission function can be calculated, without pilot control block, as follows from the status equations (6) to (12) in accordance with the equation

$$G(s) = \frac{\varphi_{KD}(s)}{u_{Dpilot}(s)} = \underline{C}_D (s\underline{I} - \underline{A}_D)^{-1} \underline{B}_D \qquad (17)$$

The following expression follows therefrom for the transmission function:

$$G(s) = \frac{\dfrac{K_{PD}i_D}{\beta 2\pi}(m(1-\cos\varphi_A)s^2 + b_{DL}s + c_{DL})}{m\cos^2\varphi_A(J_D - ml^2 + m_K l^2)s^5 + (b_{DL}\cos^2\varphi_A(J_D + m_K l^2) + mb_D)s^4 +}$$

$$\overline{(c_{DL}\cos^2\varphi_A(J_D + m_K l^2) + b_D b_{DL} + m\dfrac{i_D^2 V}{\beta 4\pi^2})s^3 + (b_D c_{DL} + b_{DL}\dfrac{i_D^2 V}{\beta 4\pi^2})s^2}$$

$$\overline{c_{DL}\dfrac{i_D^2 V}{\beta 4\pi^2}s}$$

$$(18)$$

The pilot control block must now be taken into account in the transmission function. As a result

$$G_{VD}(s) = \frac{\varphi_{KD}}{\varphi KD_{ref}} = G(s) \cdot (K_{VD0} + K_{VD1}s + K_{VD2}s^2 + K_{VD3}s^3 + K_{VD4}s^4) \qquad (19)$$

is produced from (18).

This expression has the following structure after being multiplied out:

$$\frac{\varphi_{KD}}{\varphi_{KDref}} = \frac{...b_2(K_{VDi}) \cdot s^2 + b_1(K_{VDi}) \cdot s + b_0(K_{VDi})}{...a_2 \cdot s^2 + a_1 \cdot s + a_0} \cdot \qquad (20)$$

Only the coefficients $b_4$ to $b_0$ and $a_4$ to $a_0$ are of interest when calculating the intensifications $K_{VDi}$ ($K_{VD0}$ to $K_{VD4}$). Ideal system behaviour in relation to position, the velocity, the acceleration, the jerk and optionally the derivative of the jerk is precisely produced when the transmission function of the entire system of pilot control and transmission function of the axis of rotation of the turntable ladder according to equation 19 and 20 satisfies the following conditions in its coefficients $b_i$ and $a_i$:

$$\frac{b_0}{a_0} = 1$$

$$\frac{b_1}{a_1} = 1$$

$$\frac{b_2}{a_2} = 1 \qquad\qquad (21)$$

$$\frac{b_3}{a_3} = 1$$

$$\frac{b_4}{a_4} = 1$$

This linear equation system can be solved in analytical form according to the pilot control intensifications $K_{VD0}$ to $K_{VD4}$ sought.

By way of example, this is shown for the case of the model according to equations 6 to 12. The evaluation of equation 19 produces

$$a_0 = 0$$

$$b_0 = K_{VD0} \frac{K_{PD} i_D}{2\pi\beta}$$

$$a_1 = \frac{c_{DL} i_D^2 V}{4\pi^2 \beta}$$

$$b_1 = (c_{DL} K_{VD1} + b_{DL} K_{VD0}) \frac{K_{PD} i_D}{2\pi\beta}$$

$$a_2 = \frac{b_{DL} i_D^2 V}{4\pi^2 \beta} + c_{DL} b_D$$

$$b_2 = (m(\cos\varphi_A - 1)K_{VD0} + b_{DL} K_{VD1} + c_{DL} K_{VD2}) \frac{K_{PD} i_D}{2\pi\beta}$$

$$a_3 = J_{DK} c_{DL} \cos^2\varphi_A + b_{DL} b_D + m\frac{i_D^2 V}{4\pi^2 \beta}$$

$$b_3 = (m(\cos\varphi_A - 1)K_{VD1} + b_{DL} K_{VD2} + c_{DL} K_{VD3}) \frac{K_{PD} i_D}{2\pi\beta}$$

$$a_4 = J_{DK} b_{DL} \cos^2\varphi_A + m b_D$$

$$b_4 = (m(\cos\varphi_A - 1)K_{VD2} + b_{DL} K_{VD3} + c_{DL} K_{VD4}) \frac{K_{PD} i_D}{2\pi\beta}$$

$$(22)$$

for the coefficients $b_i$ and $a_i$.

The equation system (22) is linear in relation to the pilot control intensifications $K_{VD0}$ to $K_{VD4}$ and can now be solved according to $K_{VD0}$ to $K_{VD4}$. As a result, the pilot control intensifications $K_{VD0}$ to $K_{VD4}$ at:

$$K_{VD0} = 0$$

$$K_{VD1} = \frac{i_D V}{2\pi K_{PD}}$$

$$K_{VD2} = \frac{b_D 2\pi \beta}{i_D K_{PD}}$$

$$K_{VD3} = \frac{(4c_{DL}\beta\pi^2 \cos^2 \varphi_A (J_D + m_K l^2) + \cos \varphi_A m i_D^2 V)}{2\pi c_{DL} i_D K_{PD}} \qquad (23)$$

$$K_{VD4} = \frac{m \cos \varphi_A (-b_{DL}\dfrac{i_D^2 V}{4\pi^2 \beta} + c_{DL}b_D)\beta 2\pi}{c_{DL}^2 i_D K_{PD}}$$

are obtained.

This has the advantage that these pilot control intensifications are now dependent on the model parameters. In the case of the model according to equations (6) to (12) the system parameters are $K_{PD}$, $i_D$, V, l, $\varphi_A$, $\beta$, $J_D$, m, $m_K$, $C_{DL}$, $b_{DL}$, $b_D$.

The change in model parameters such as the angle of elevation $\varphi_A$ and the ladder length 1 can be taken into account immediately in the change to the pilot control intensifications. Therefore, these can always be tracked as a function of the measured values of $\varphi_A$ and 1. In other words, if a different run-out length 1 of the ladder unit is started with the run-out/run-in axis, the pilot control intensifications of the axis of rotation change automatically as a result, so the oscillation-damping behaviour of the pilot control during travel of the cage is retained.

Furthermore, the pilot control intensifications can be adapted very quickly when a transfer is made to a different type of turntable ladder with different technical data (such as eg. changed m).

The parameters $K_{PD}$, $i_D$, V, $\beta$, m, $m_K$, are given in the information sheet regarding technical data. A mean value or a measured value obtained from sensor data is assumed for the cage mass. In principle, the parameters 1, $\varphi_A$ are determined from sensor data as changing system parameters. The parameters $J_D$, $C_{DL}$ are known from FEM tests. The damping parameters $b_{DL}$, $b_D$ are determined from frequency response measurements.

It is now possible to control the axis of rotation of the turntable ladder with the pilot control block in such a way that no vibrations of the cage occur during travel of the axis of rotation and the cage follows the path generated by the path planning module path-accurately under the idealised conditions of the dynamic model according to equations (6) to (12). The dynamic model is, however, only an abstract reproduction of the real dynamic conditions. In addition, external disturbances (such as strong winds or similar) can act on the turntable ladder.

Therefore, the pilot control block 71 is supported by a status controller 73. At least one of the measured variables $w_h$, $\dot{w}_h$, $\varphi_D$, $\dot{\varphi}_D$, $M_{MD}$ is weighted with a controller intensification in the status controller and fed back to the control input. There, the difference between the output value of the pilot control block 71 and the output value of the status controller block 73 is formed. If the status controller block is available, this must be taken into account when calculating the pilot control intensifications.

Owing to the feedback, equation (14) changes to

$$\dot{\underline{x}}_D = (\underline{A}_D - \underline{B}_D\underline{K}_D)\underline{x}_D + \underline{B}_D\underline{S}_D\underline{w}_D$$

$$\underline{y}_D = \underline{C}_D\underline{x}_D \qquad (24)$$

$\underline{K}_D$ is the matrix of controller intensifications of the status controller. Accordingly, the describing transmission function which is the basis for calculating the pilot control intensifications also changes according to (17) to

$$G_{DR}(s) = \frac{\varphi_{KD}(s)}{u_{Dpilot}(s)} = \underline{C}_D(s\underline{I} - \underline{A}_D + \underline{B}_D\underline{K}_D)^{-1}\underline{B}_D \qquad (25)$$

In the case of the axis of rotation, the transmission function is

$$G_{DR}(s) = \frac{2\pi K_{PD}i_D(m(\cos\varphi_A - 1)s^2 + b_{DL}s + c_{DL})}{4\pi^2\beta m\cos^2\varphi_A(J_D - ml^2 + m_Kl^2)s^5 + 4\pi^2\beta(b_{DL}\cos^2\varphi_A(J_D + m_Kl^2) + mb_D)s^4 +}$$

$$\beta 4\pi^2(c_{DL}\cos^2\varphi_A(J_D + m_Kl^2) + b_Db_{DL} + m\frac{i_D^2 V}{\beta 4\pi^2} + \frac{mi_D K_{PD}(k_{4D} + k_{2D}l\cos\varphi_A)}{2\pi\beta})s^3$$

$$+ 4\pi^2\beta(b_D c_{DL} + b_{DL}\frac{i_D^2 V}{\beta 4\pi^2} + \frac{K_{PD}i_D(b_{DL}k_{4D} + lm\cos\varphi_A k_{1D} + mk_{3D})}{2\pi\beta})s^2 +$$

$$(c_{DL}i_D^2 V + 2\pi K_{PD}i_D(b_{DL}k_{3D} + c_{DL}k_{4D})s + 2\pi K_{PD}i_Dc_{DL}k_{3D}$$

$$(26)$$

in the case of feedback of the variables $w_h$, $\dot{w}_h$, $\varphi_D$, $\dot{\varphi}_D$.

The variables $k_{1D}$, $k_{2D}$, $k_{3D}$, $k_{4D}$ are the controller intensifications of the status controller which the variables $W_h$, $\dot{w}_h$, $\varphi_D$, $\dot{\varphi}_D$ feed back suitably weighted to the control input.

To calculate the pilot control intensifications $K_{Vdi}$ ($K_{VD0}$ to $K_{VD4}$) (26) is, in turn, initially expanded by the product of the reference variables.

$$G_{VDR}(s) = \frac{\varphi_{KD}}{\varphi_{KDref}} = G_{DR}(s) \cdot (K_{VD0} + K_{VD1}s + K_{VD2}s^2 + K_{VD3}s^3 + K_{VD4}s^4) \qquad (27)$$

This expression has the same structure in relation to $K_{VDi}$ ($K_{VD0}$ to $K_{VD4}$) as equation (20). Ideal system behaviour in relation to position, the velocity, the acceleration, the jerk and optionally the derivative of the jerk is precisely produced when the transmission function of the entire system of pilot control and transmission function of the axis of rotation of the turntable ladder according to equation 27 satisfies the condition (21) in its coefficients $b_i$ and $a_i$.

This again leads to a linear equation system similar to (22) which can be solved in analytical form according to the pilot control intensifications $K_{VD0}$ to $K_{VD4}$ sought. However, the coefficients $b_i$ and $a_i$ are, in addition to the pilot control intensifications $K_{VD0}$ to $K_{VD4}$ sought, now also dependent on the known controller intensifications $k_{1D}$, $k_{2D}$, $k_{3D}$, $k_{4D}$ of the status controller, the derivation of which will be described in the following part of the description.

For pilot control intensifications $K_{VD0}$ to $K_{VD4}$ of pilot control block 71 while taking into account the status controller block 73 the following are obtained:

$$K_{VD0} = k_{3D}$$

$$K_{VD1} = \frac{i_D V}{2\pi K_{PD}} + k_{4D}$$

$$K_{VD2} = \frac{b_D 2\pi\beta}{i_D K_{PD}} + \frac{m\cos\varphi_A}{c_{DL}}(l \cdot k_{1D} + k_{3D})$$

$$K_{VD3} = \frac{(4c_{DL}\beta\pi^2\cos^2\varphi_A(J_D + m_K l^2) + \cos\varphi_A m i_D^2 V)}{2\pi c_{DL} i_D K_{PD}} +$$

$$\frac{m\cos\varphi_A}{c_{DL}^2}(c_{DL}(lk_{2D} + k_{4D}) - b_{DL}(lk_{1D} + k_{3D}))$$

$$K_{VD4} = \frac{m\cos\varphi_A(-b_{DL}i_D^2 V + 4\pi^2\beta c_{DL}b_D)}{2c_{DL}^2 i_D K_{PD}\pi} - \frac{m\cos\varphi_A}{c_{DL}^3}(c_{DL}m(\cos\varphi_A - 1)(lk_{1D} + k_{3D}) +$$

$$- c_{DL}b_{DL}(lk_{2D} + k_{4D}) + b_{DL}^2(k_{3D} + lk_{1D}))$$

$$(28)$$

Therefore, the pilot control intensifications which guarantee vibration-free and path-accurate travel of the cage in the direction of rotation based on the idealised model are known with equation (28) in a manner similar to equation (23). However, the status controller intensifications $k_{1D}$, $k_{2D}$, $k_{3D}$, $k_{4D}$ are to be determined now. This will be explained below.

The controller feedback 73 is designed as status controller. A status controller is characterised in that every status variable, i.e. every component of the status vector $\underline{x}_D$, is weighted with a control intensification $k_{iD}$ and fed back to the control input of the path. The control intensifications $k_{iD}$ are combined to form the control vector $\underline{K}_D$.

According to "Unbehauen, Regelungstechnik 2 [Control Engineering 2], *loc cit*" the dynamic behaviour of the system is determined by the position of the inherent values of the system matrix $\underline{A}_D$, which are simultaneously poles of the transmission function in the frequency range. The inherent values of the matrix can be determined from the determinants by calculating the zero positions in relation to the variables s of the characteristic polynomial as follows:

$$\det(s\underline{I} - \underline{A}_D) \equiv 0 \qquad\qquad (29)$$

$\underline{I}$ is the unit matrix. Evaluation of (29) produces, in the case of the selected status model according to equations 6 to 12, a polynomial of the fifth order of the form:

$$s^5 + a_4 s^4 + a_3 s^3 + a_2 s^2 + a_1 s + a_0 \equiv 0 \qquad\qquad (30)$$

By feeding back the status variables via the controller matrix $\underline{K}_D$ to the control input, these inherent values can be specifically displaced as the position of the inherent values is now determined by evaluation of the following determinants:

$$\det(s\underline{I} - \underline{A}_D + \underline{B}_D \cdot \underline{K}_D \equiv 0 \qquad\qquad (31)$$

Evaluation of (31) again produces a polynomial of the fifth order which now depends, however, on the controller intensifications $k_{iD}$ (i = 1..5). In the case of the model according to equations 6 to 12, (30) becomes

$$s^5 + a_4(k_{5D},) s^4 + a_3(k_{5D} \cdot k_{4D}, k_{2D}) s^3 + a_2(k_{5D}, k_{4D}, k_{3D}, k_{1D}) s^2$$
$$+ a_1(k_{5D}, k_{4D}, k_{3D}) s + a_0(k_{3D}) \equiv 0 \qquad (32)$$

It is now demanded that, owing to the controller intensifications $k_{iD}$, equations 31 and 32 assume certain zero positions in order to influence the dynamics of the system in a targeted manner, which dynamics are reflected in the zero positions of this polynomial. As a result, an input for this polynomial according to:

$$p(s) = \prod_{i=1}^{n} (s - r_i) \qquad (33)$$

is produced, n being the system ordering with which the dimension of the status vector is to be equated. In the case of the model according to equations 6 to 12, n = 5 and therefore p(s):

$$p(s) = (s - r_i)(s - r_2)(s - r_3)(s - r_4)(s - r_5) = s^5 + p_4 s^4 + p_3 s^3 + p_2 s^2 + p_1 s^1 + p_0 \qquad (34)$$

The $r_i$ are selected in such a way that the system is stable, the control operates sufficiently quickly with good damping and the control variable restriction is not achieved with typically occurring control deviations. The $r_i$ can be determined in accordance with these criteria prior to commissioning in simulations.
The control intensifications can now be determined by coefficient comparison of the polynomials of equations 31 and 33.

$$\det(s\underline{I} - \underline{A}_D + \underline{B}_D \cdot \underline{K}_D) \equiv \prod_{i=1}^{n} (s - r_i) \qquad (35)$$

In the case of the model according to equations 6 to 12, the following linear equation system is produced as a function of the control intensifications $k_{iD}$:

$$a_4(k_{5D}) - p_4 = 0$$
$$a_3(k_{5D}, k_{4D}, k_{2D}) - p_3 = 0$$
$$a_2(k_{5D}, k_{4D}, k_{3D}, k_{1D}) - p_2 = 0$$
$$a_1(k_{5D}, k_{4D}, k_{3D}) - p_1 = 0 \qquad (36)$$
$$a_0(k_{3D}) - p_0 = 0$$

Evaluation of the above equation system (36) now provides analytical mathematical expressions for the controller intensifications as a function of the desired poles $r_i$ and the system parameters. In the case of model according to equations 6 to 12 the system parameters are $K_{PD}$, $i_D$, V, 1, $\varphi_A$, β, $J_D$, m, $m_K$, $c_{DL}$, $b_{DL}$, $b_D$. An advantage of this controller design is that parameter changes in the system, such as the run-out length 1 or the angle of elevation $\phi_A$ can be taken into account immediately in altered controller intensifications. This is of critical importance for optimised control behaviour.
As a complete status controller demands knowledge of all status variables, it is advantageous to design the control as output feedback instead of a status observer. This means that not all status variables are fed back via the controller, but only those which are detected by measurements. There are therefore individual $k_{iD}$ at zero. In the case of the model according to equations 6 to 12, measurement of the drive moment of the axis of rotation motor can, for example, be dispensed with. Therefore, $k_{5D} = 0$. $k_{1D}$ to $k_{4D}$ can be calculated according to equation (36) despite this. In addition, it can be sensible to calculate the controller parameters owing to the not inconsiderable degree of calculation complexity for a single operating point. Subsequently however, the actual inherent value position of the system with the controller matrix

$$\underline{K}_D = [k_{1D} \ k_{2D} \ k_{3D} \ k_{4D} \ 0] \tag{37}$$

must be numerically checked by means of the calculation from equation 31. As this can only be done numerically, the entire expanse covered by the changing system parameters must be incorporated. In this case, the changing system parameters would be 1 and $\phi_A$. These parameters fluctuate in the interval $[l_{min}, l_{max}]$ and $[\varphi_{Amin}, \varphi_{Amax}]$. In other words, a plurality of support points $l_i$ and $\varphi_{Aj}$ must be chosen in these intervals and the system matrix $\underline{A}_{ij}$ ($l_i$, $\varphi_{Aj}$) calculated for all possible combinations of these changing system parameters and inserted in equation 31 and evaluated with $\underline{K}_D$ from equation 37:

$$\det(s\underline{I} - \underline{A}_{ij} + \underline{B} \cdot \underline{K}_D) = 0 \text{ for all i.j} \tag{38}$$

If all zero positions of (38) are always less than zero, the stability of the system is ensured and the originally selected poles $r_i$ can be retained. If this is not the case, then a correction of the poles $r_i$ according to equation (33) may be necessary.

Upon feedback of $w_h$, $\dot{w}_h$, $\varphi_D$, $\dot{\varphi}_D$ the output of the status controller block 73 is then

$$u_{Djerk} = k_{1D} \ w_h + k_{2D} \ \dot{w}_h + k_{3D} \ \varphi_D + k_{4D} \ \dot{\varphi}_D \tag{39}$$

The set control voltage of the proportional valve for the axis of rotation, while taking into account the pilot control 71, is then

$$u_{Dref} = u_{Dpilot} - u_{Djerk} \tag{40}$$

As only linear system portions can be taken into account in the status model according to equations 6 to 12, static non-linearities of the hydraulics in block 75 of the hydraulic compensation can optionally be taken into account in such a way that linear system behaviour is produced in relation to the system input. The most important non-linear effects of the hydraulics are the play of the proportional valve about the zero point and hysteresis effects of the subordinate conveying power control. For this purpose, the static characteristic curve between control voltage $u_{StD}$ of the proportional valve and the resulting conveying power $Q_{FD}$ is recorded experimentally. The characteristic curve can be described by a mathematical function

$$Q_{FD} = f(u_{StD}) \tag{41}$$

Linearity is now demanded in relation to the system input. In other words, the proportional valve and the hydraulic compensation block are to have the following transmission behaviour summarised in accordance with equation (5)

$$Q_{FD} = K_{PD} u_{StD} \tag{42}$$

If the compensation block 75 has the static characteristic curve

$$u_{StD} = h(u_{Dref}) \tag{43}$$

then the condition (42) is met exactly when

$$h(u_{Dref}) = f^{-1}(K_{PD}u_{Dref}) \tag{44}$$

is chosen as static compensation characteristic curve.

Thus, the individual components of the axis controller for the axis of rotation are described. In conclusion, the combination of path planning module and rotation axis controller meets the requirement of a vibration-free and path-accurate movement with the axis of rotation.

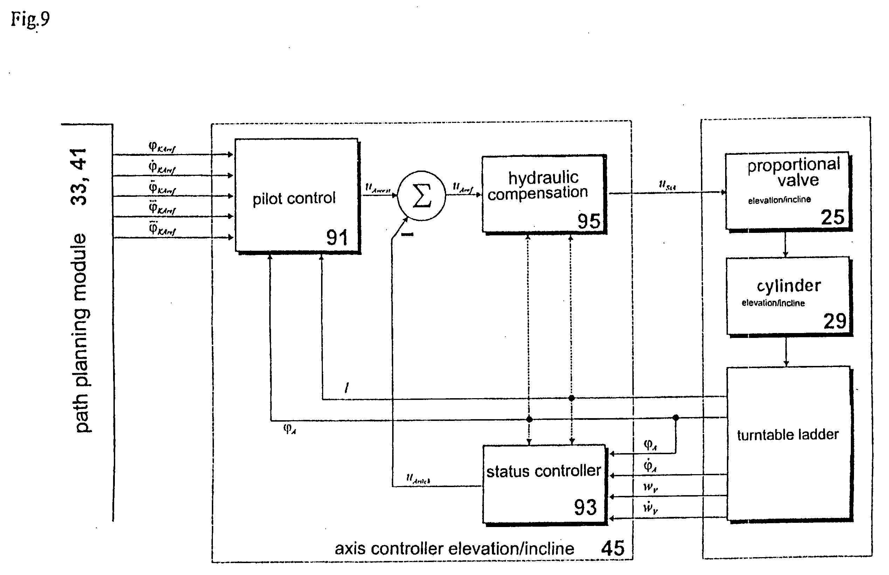

Based on these results, the axis controller for the elevation/incline 7 axis will now be described. Fig. 9 shows the basic structure of the axis controller elevation/incline.

The output functions of the path planning module in the form of the set cage position in the direction of the elevation/incline axis and their derivatives (velocity, acceleration, jerk and derivative of the jerk) are passed to the pilot control block 91 (block 71 in the axis of rotation). These functions are intensified in the pilot control block in such a way that path-accurate travel of the ladder without vibrations is produced under the idealised preconditions of the dynamic model. The basis for determining the pilot control intensifications is in turn the dynamic model which is derived in the following section for the elevation/incline axis. Therefore, vibrating of the turntable ladder is suppressed under these idealised preconditions and the cage follows the path generated.

As with the axis of rotation, the pilot control can optionally be supplemented by a status controller block 93 (cf. axis of rotation 73) in order to even out disturbances (for example wind influences) and compensate model errors. In this block, at least one of the measured variables: angle of elevation $\varphi_A$, angle of elevation velocity $\dot{\varphi}_A$, bending of the ladder unit in the vertical direction $w_v$ or the derivative of the vertical bending $\dot{w}_v$ is intensified and fed back to the control input again. The derivative of the measured variables $\varphi_A$ and $w_v$ is formed numerically in the microprocessor control.

Owing to the dominant static non-linearity of the hydraulic drive units (hysteresis, play), the value formed from pilot control $u_{Apilot}$ and optional status controller output $u_{Ajerk}$ is now changed for the control input $u_{Aref}$ in the hydraulic compensation block 95 (similar to block 75) in such a way that linear behaviour of the entire system can be assumed. The output of the block 95 (hydraulic compensation) is the corrected control variable $u_{StA}$. This value is then passed to the proportional valve of the hydraulic circuit for the cylinder of the elevation/incline axis.

The derivation of the dynamic model for the axis of elevation will now serve to explain the mode of operation in detail, which derivation is the basis for calculating the pilot control intensifications and the status controller.

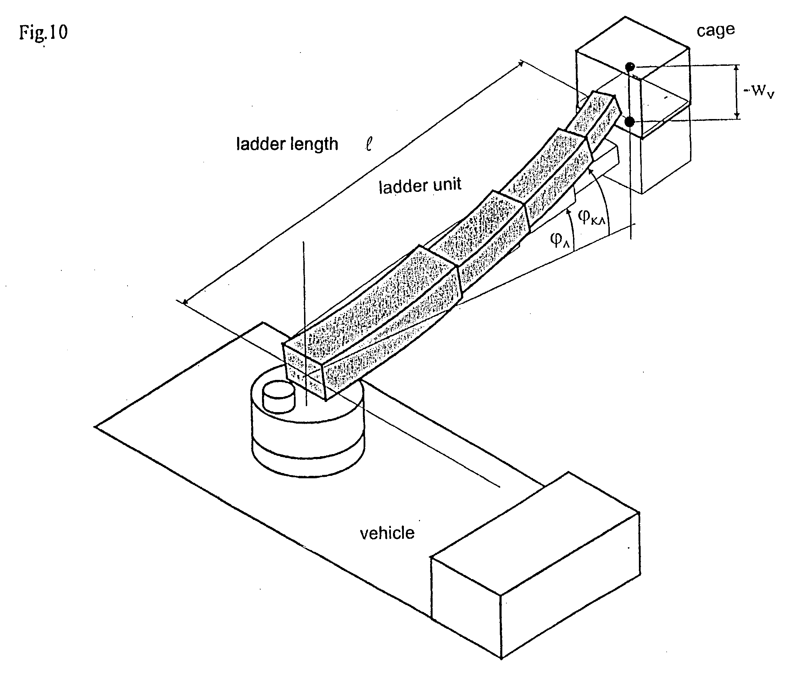

For this purpose, Fig. 10 provides descriptions for the definition of the model variables. The connection shown there between the angle of elevation position $\varphi_A$ of the ladder mechanism in relation to the inertial system with the unit vectors $\underline{e}_{11}$ to $\underline{e}_{13}$ and the cage angle of elevation position $\varphi_{KA}$, which, owing to bending $w_v$, is calculated in accordance with the equation

$$\varphi_{KA} = \varphi_A - \frac{w_v}{l} \tag{45}$$

for small bends, is essential in this case. This dynamic system can be described by the following differential equations.

$$(J_A(l) + m_k l^2) \cdot \ddot{\varphi}_A - ml \cdot \ddot{w}_v = M_{MA} + ml \cdot g\cos\varphi_A - b_A \dot{\varphi}_A$$

$$-ml \cdot \ddot{\varphi}_A + m \cdot \ddot{w}_v + b_{AL} \cdot \dot{w}_v + c_{AL}(l) \cdot w_v = 0 \tag{46}$$

$J_A$ is the moment of inertia of the ladder unit about the axis of elevation. $M_{MA}$ is the driving torque of the hydraulic cylinder on the ladder. $b_A$ is the viscous friction in the hydraulic cylinder. The first equation of (4) substantially describes the movement equation in relation to the elevation kinematics with the driving hydraulic cylinder of the ladder, the reaction owing to bending of the ladder unit being taken into account. The second equation of (4) is the movement equation which describes the bending $w_v$, stimulation of the bending vibration being caused by raising or inclining the ladder unit via the angular acceleration or an external disturbance, expressed by initial conditions for these differential equations. In the second equation of (4) the parameter $c_{AL}$ is the stiffness of the ladder unit and $b_{AL}$ the damping constant for the ladder vibration in the direction of the elevation/incline axis. A function is calculated for the stiffness as a function of 1 from FEM simulations as this stiffness is highly dependent on the run-out state of the ladder unit 1. Therefore, $c_{AL}(1)$ is always to be assumed hereinafter for $c_{AL}$. This also applies to the moment of inertia $J_A$ calculated from constructive data which is also a function dependent on I. The parameters not mentioned can be inferred from the details relating to equation 4 of the axis of rotation.

The hydraulic drive is described by the following equations

$$M_{MA} = F_{Cyl} d_b \cos \varphi_p (\varphi_A)$$

$$F_{Cyl} = p_{Cyl} A_{Cyl}$$

$$\dot{p}_{Cyl} = \frac{2}{\beta V_{Cyl}} (Q_{FA} - A_{Cyl} \dot{z}_{Cyl}(\varphi_A, \dot{\varphi}_A))$$

$$Q_{FA} = K_{PA} u_{SiA}$$

$$(47)$$

$F_{cyl}$ is the force of the hydraulic cylinder on the piston rod, $P_{cyl}$ is the pressure in the cylinder (depending on the direction of movement at the piston or ring side). $A_{cyl}$ is the cross-sectional surface of the cylinder (depending on the direction of movement at the piston or ring side), $\beta$ is the oil compressibility, $V_{cyl}$ is the cylinder volume, $Q_{FA}$ is the conveying power in the hydraulic circuit for raising and inclining and $K_{PA}$ is the proportionality constant which provides the connection between conveying power and control voltage of the proportional valve. Dynamic effects of the subordinate conveying power control are ignored. Half the entire volume of the hydraulic cylinder is assumed in the oil compression in the cylinder as relevant cylinder volume. $z_{cyl}$, $\dot{z}_{cyl}$ are the position and the velocity of the cylinder rod. These and the geometric parameters $d_b$ and $\varphi_p$ are dependent on the elevation kinematics.

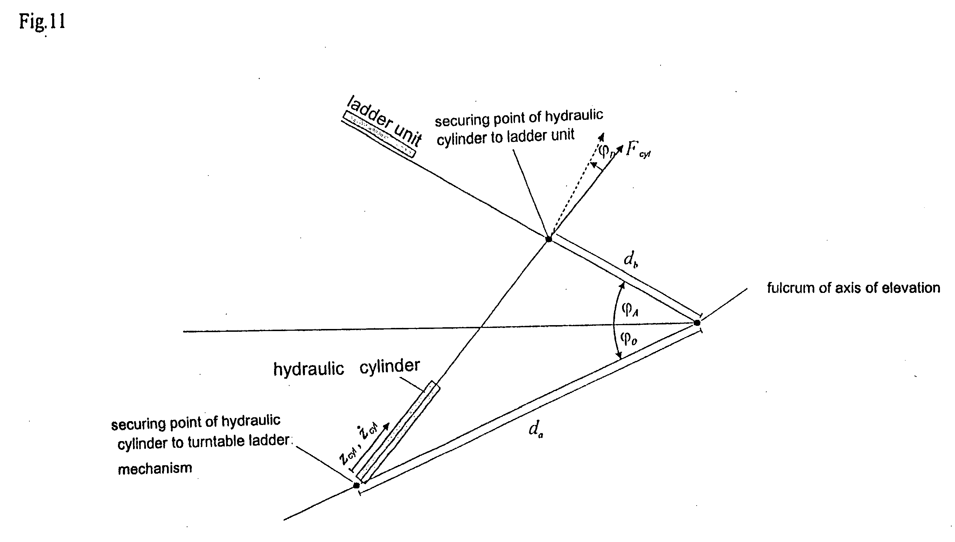

Fig. 11 shows the elevation kinematics of the axis of elevation. The hydraulic cylinder is anchored to the lower end in the turntable ladder mechanism. The spacing $d_a$ between this point and the fulcrum of the ladder unit about the axis of elevation can be inferred from construction data. The piston rod of the hydraulic cylinder is secured to the ladder unit at a spacing $d_b$. $\varphi_0$ is also known from construction data. The following connection between angle of elevation $\phi_A$ and the hydraulic cylinder position $z_{cyl}$ can be derived therefrom.

$$z_{cyl} = \sqrt{d_a^2 + d_b^2 - 2 d_b d_a \cos(\varphi_A + \varphi_0)} \qquad (48)$$

As only the angle of elevation $\varphi_A$ is a measured variable, the inverse relation of (48) and the dependency between piston rod velocity $\dot{z}_{cvl}$ and elevation velocity $\dot{\phi}_A$ are also of interest.

$$\varphi_A = \arccos(\frac{d_a^2 + d_b^2 - z_{Cyl}^2}{2 d_a d_b}) - \varphi_0 \qquad (49)$$

$$\dot{\varphi}_A = \frac{\partial \varphi_A}{\partial z_{Cyl}} \dot{z}_{Cyl} = \frac{\sqrt{d_a^2 + d_b^2 - 2 d_b d_a \cos(\varphi_A + \varphi_0)}}{d_b d_a \sin(\varphi_A + \varphi_0)} \dot{z}_{Cyl} \qquad (50)$$

The projection angle $\varphi_p$ must also be calculated in order to calculate the active moment on the ladder unit.

$$\cos\varphi_p = \frac{d_a \sin(\varphi_A + \varphi_0)}{\sqrt{d_a^2 + d_b^2 - 2d_b d_a \cos(\varphi_A + \varphi_0)}} = \frac{h_1}{h_2} \qquad (51)$$

As a result, the dynamic model of the axis of elevation described in equations 46 to 51 can now be transformed into the status representation (see also O. Föllinger; Regelungstechnik [Control Engineering], 7th Edition, Hüthig Verlag. Heidelberg 1992). The following status representation of the system is produced.
status representation:

$$\dot{\underline{x}}_A = \underline{A}_A \underline{x}_A + \underline{B}_A \underline{u}_A$$
$$\underline{y}_A = \underline{C}_A \underline{x}_A \qquad (52)$$

with:

status vector:

$$\underline{x}_A = \begin{bmatrix} w_v \\ \dot{w}_v \\ \varphi_A \\ \dot{\varphi}_A \\ M_{MA} \end{bmatrix} \qquad (53)$$

control variable:

$$u_A = u_{StA} \qquad (54)$$

output variable:

$$y_A = \varphi_{KA} \qquad (55)$$

system matrix:

$$\underline{A}_A = \begin{bmatrix} 0 & 1 & 0 & 0 & 0 \\ -\dfrac{c_{AL}J_{AK}}{m(J_{AK}-ml^2)} & -\dfrac{b_{AL}J_{AK}}{m(J_{AK}-ml^2)} & 0 & -\dfrac{b_A l}{(J_{AK}-ml^2)} & \dfrac{l}{(J_{AK}-ml^2)} \\ 0 & 0 & 0 & 1 & 0 \\ -\dfrac{c_{AL}l}{(J_{AK}-ml^2)} & -\dfrac{b_{AL}l}{(J_{AK}-ml^2)} & 0 & -\dfrac{b_A}{(J_{AK}-ml^2)} & \dfrac{r}{(J_{AK}-ml^2)} \\ 0 & 0 & 0 & -\dfrac{2A_{Zyl}^2}{\beta V_{Zyl}}\dfrac{(d_b d_a \sin(\varphi_A+\varphi_0))^2}{(d_a^2+d_b^2-2d_b d_a \cos(\varphi_A+\varphi_0))} & 0 \end{bmatrix} \cdot$$

$$J_{AK}(l) = J_A(l) + m_K l^2$$

$$(56)$$

control vector:

$$\underline{B}_A = \begin{bmatrix} 0 \\ 0 \\ 0 \\ 0 \\ \dfrac{2A_{Zyl}d_b d_a \sin(\varphi_A+\varphi_0)K_{PA}}{V_{Zyl}\beta\sqrt{d_a^2+d_b^2-2d_b d_a \cos(\varphi_A+\varphi_0)}} \end{bmatrix} \qquad (57)$$

output vector:

$$\underline{C}_A = \begin{bmatrix} -\dfrac{1}{l} & 0 & 1 & 0 & 0 & 0 \end{bmatrix} \qquad (58)$$

The dynamic model of the axis of rotation is regarded as a parameter-changing system in relation to the runout length 1 and the trigonometric functional portions of the angle of elevation $\varphi_A$. The equations (52) to (58) are the basis for the design of the pilot control 91 and the status controller 93 now described.

Input variables of the pilot control block 91 are the set angle position $\varphi_{KA}$, the set angular velocity $\dot{\varphi}_{KA}$, the set angular acceleration $\ddot{\varphi}_{KA}$, the set jerk $\dddot{\varphi}_{KA}$ and optionally the derivative of the set jerk. The reference variable $\underline{W}_A$ is therefore similar to (13)

$$\underline{W}_A = \begin{bmatrix} \varphi_{KAref} \\ \dot{\varphi}_{KAref} \\ \ddot{\varphi}_{KAref} \\ \dddot{\varphi}_{KAref} \\ (\ddddot{\varphi}_{KAref}) \end{bmatrix} \qquad (59)$$

The components of $\underline{W}_A$ are weighted with the pilot control intensifications $K_{VA0}$ to $K_{VA4}$ in the pilot control block 91 and their sum is passed to the control input. In the event that the axis controller for the axis of elevation does not have a status controller block 93 the variable $u_{Apilot}$ from the pilot control block is identical to the reference control voltage $u_{Aref}$ which is passed as control voltage $u_{StA}$ to the proportional valve after compensation of the hydraulics non-linearity. The status representation (52) is expanded as a result in a manner similar to (14) to

$$
\begin{aligned}
\underline{\dot{x}}_A &= \underline{A}_A\underline{x}_A + \underline{B}_A\underline{S}_A\underline{w}_A \\
\underline{y}_A &= \underline{C}_A\underline{x}_A
\end{aligned}
\tag{60}
$$

with the pilot control matrix

$$
\underline{S}_A = [K_{VA0}\ K_{VA1}\ K_{VA2}\ K_{VA3}\ K_{VA4}]\ .
\tag{61}
$$

If the matrix equation (60) is evaluated then it can be written as algebraic equation for the pilot control block, wherein $u_{Apilot}$ is the uncorrected set control voltage for the proportional valve based on the idealised model.

$$
u_{Apilot} = K_{VA0}\varphi_{KAref} + K_{VA1}\dot{\varphi}_{KAref} + K_{VA2}\ddot{\varphi}_{KAref} + K_{VA3}\dddot{\varphi}_{KAref} (+K_{VA4}\ddddot{\varphi}_{KAref})
\tag{62}
$$

$K_{VA0}$ to $K_{VA4}$ are the pilot control intensifications which are calculated as a function of the current angle of elevation $\varphi_A$ and the run-out length 1 of the ladder unit such that the cage follows the set trajectory path-accurately without vibrations.
The pilot control intensifications $K_{VA0}$ to $K_{VA4}$ are calculated as follows. In relation to the cage angle $\varphi_{KA}$ control variable, the transmission function can be calculated, without pilot control block, as follows from the status equations (52) to (58) in accordance with the equation

$$
G(s) = \frac{\varphi_{KA}(s)}{u_{Apilot}(s)} = \underline{C}_A(s\underline{I} - \underline{A}_A + \underline{B}_A\underline{K}_A)^{-1}\underline{B}_A
\tag{63}
$$

The transmission function between output pilot control block and cage position can be calculated with equation (63) in a similar way to equation (18). By taking into account the pilot control block 91 in equation (63), a relationship similar to equation (19) is obtained which after multiplying out has the form

$$
\frac{\varphi_{KA}}{\varphi_{KAref}} = \frac{...b_2(K_{VAi})\cdot s^2 + b_1(K_{VAi})\cdot s + b_0(K_{VAi})}{...a_2\cdot s^2 + a_1\cdot s + a_0}\ .
\tag{64}
$$

Only the coefficients $b_4$ to $b_0$ and $a_4$ to $a_0$ are of interest when calculating the intensifications $K_{VAi}$ ($K_{VA0}$ to $K_{VA4}$). Ideal system behaviour in relation to position, the velocity, the acceleration, the jerk and optionally the derivative of the jerk is precisely produced when the transmission function of the entire system of pilot control and transmission function of the axis of elevation of the turntable ladder satisfies the conditions according to equation (21) for the coefficients $b_i$ and $a_i$.
A linear equation system again results which can be solved in analytical form according to the pilot control intensifications $K_{VA0}$ to $K_{VA4}$ sought.
For the case of the model according to equations 52 to 58,

$$K_{VA0} = 0$$

$$K_{VA1} = \frac{A_{Cyl}d_b h_2}{K_{PA}h_1}$$

$$K_{VA2} = \frac{b_A \beta V_{Cyl} h_1}{2 d_b A_{Cyl} K_{PA} h_2} \tag{65}$$

$$K_{VA3} = \frac{J_{AK} c_{AL} \beta V_{Cyl} h_1^2 + 2m A_{Cyl}^2 d_b^2 h_2^2}{2 d_b c_{AL} A_{Cyl} K_{PA} h_2 h_1}$$

$$K_{VA4} = \frac{m c_{AL} b_A \beta V_{Cyl} h_1^2 - 2m A_{Cyl}^2 b_{AL} d_b^2 h_2^2}{2 d_b c_{AL}^2 A_{Cyl} K_{PA} h_2 h_1}$$

are produced for the pilot control intensifications when calculated in a manner similar to which the axis of rotation (equations 18 to 23)
wherein:

$$h_1 = \sqrt{d_a^2 + d_b^2 - 2 d_b d_a \cos(\varphi_A + \varphi_0)}$$
$$h_2 = d_a \sin(\varphi_A + \varphi_0) \tag{66}$$

As already shown with the axis of rotation, this has the advantage that the pilot control intensifications are produced as a function of the model parameters. In the case of the model according to equations 52 to 58 the system parameters are $K_{PA}$, $A_{cyl}$, $V_{cyl}$, $\varphi_A$, $\beta$, $J_A$, $m$, $m_K$, $C_{AL}$, $b_{AL}$, $b_A$, $d_b$, $d_a$. A dependence on the parameter 1 is also given via the dependence of the parameter $J_A$, $c_{AL}$ on the ladder length.

As a result, the change in model parameters such as the angle of elevation $\varphi_A$ and the ladder length 1 can be taken into account immediately in the change to the pilot control. Therefore, these can always be tracked as a function of the measured values of $\varphi_A$ and 1. In other words, a different run-out length 1 of the ladder unit is started with the run-out/run-in axis, so the pilot control intensifications of the axis of rotation change automatically as a result, so the oscillation-damping behaviour of the pilot control during travel of the cage is retained.

Furthermore, the pilot control intensifications can be adapted very quickly when a transfer is made to a different type of turntable ladder with different technical data (such as changed m).

The parameters $K_{PA}$, $A_{cyl}$, $V_{cyl}$, $\beta$, $m$, $m_K$, $d_b$, $d_a$ are given in the information sheet regarding technical data. A mean value or a measured value obtained from sensor data is assumed for the cage mass. In principle, the parameters l, $\varphi_A$ are determined from sensor data as changing system parameters. The parameters $J_A$, $c_{AL}$ are known from FEM tests. The damping parameters $b_{AL}$, $b_A$ are determined from frequency response measurements.

It is now possible to control the axis of elevation of the turntable ladder with the pilot control block in such a way that no vibrations of the cage occur during travel of the axis of elevation and the cage follows the path generated by the path planning module path-accurately under the idealised conditions of the dynamic model according to equations (52) to (58). The dynamic model is, however, only an abstract reproduction of the real dynamic conditions. In addition, external disturbances (such as strong winds or similar) can act on the turntable ladder.

Therefore, the pilot control block 91 is supported by a status controller 93. At least one of the measured variables $w_v$, $\dot{w}_v$, $\varphi_A$, $\dot{\varphi}_A$ $M_{MA}$ is weighted with a controller intensification in the status controller and fed back to the control input. There, the difference between the output value of the pilot control block 91 and the output value of the status controller block 93 is formed. If the status controller block is available, this must be taken into account when calculating the pilot control intensifications.

Owing to the feedback, equation (60) changes to

$$\underline{\dot{x}}_A = (\underline{A}_A - \underline{B}_A\underline{K}_A)\,\underline{x}_a + \underline{B}_A\underline{S}_A\underline{w}_A$$

$$\underline{Y}_A = \underline{C}_A\underline{x}_A \qquad\qquad (67)$$

$K_A$ is the matrix of the controller intensifications of the status controller of the axis of elevation, similar to the controller matrix $\underline{K}_D$ of the axis of rotation. By calculating in a manner similar to with the axis of rotation in equations 25 to 28, the describing transmission function changes to

$$G_{AR}(s) = \frac{\varphi_{KA}(s)}{u_{Apilot}(s)} = \underline{C}_A(s\underline{I}-\underline{A}_A + \underline{B}_A\underline{K}_A)^{-1}\,\underline{B}_A \qquad (68)$$

In the case of the axis of elevation, for example, the variables $w_v$, $\dot{w}_v$, $\varphi_A$, $\dot{\varphi}_A$, can be fed back. The corresponding controller intensifications of $\underline{K}_4$ are $k_{1A}$, $k_{2A}$, $k_{3A}$, $k_{4A}$ for this purpose.

After taking into account the pilot control 91 in equation 68, the pilot control intensifications $K_{Vai}$ ($K_{VA0}$ to $K_{VA4}$) can be calculated according to the condition of equation 21.

This again leads to a linear equation system similar to equation 22 which can be solved in analytical form according to the pilot control intensifications $K_{VA0}$ to $K_{VA4}$ sought. It is noted that the coefficients $b_i$ and $a_i$ are now also dependent on the known controller intensifications $k_{1A}$, $k_{2A}$, $k_{3A}$, $k_{4A}$ of the status controller in addition to the pilot control intensifications $K_{VA0}$ to $K_{VA4}$ sought.

By taking into account the status controller block 93, similar to equation 28 with the axis of rotation,

$$K_{VA0} = k_{3A}$$

$$K_{VA1} = \frac{A_{Cyl}h_2 d_b}{K_{PA}h_1} + k_{4A}$$

$$K_{VA2} = \frac{b_A\beta V_{Cyl}h_1}{2d_b A_{Cyl}K_{PA}h_2} - \frac{m}{c_{AL}}k_{3A} + \frac{ml}{c_{AL}}k_{1A}$$

$$K_{VA3} = \frac{J_{AK}c_{AL}\beta V_{Cyl}h_1^2 - 2mA_{Cyl}^2 d_b^2 h_2^2}{2c_{AL}A_{Cyl}K_{PA}h_2 h_1 d_b} + \frac{m(lk_{2A} - k_{4A})}{c_{AL}} + \frac{mb_{AL}(-lk_{1A} + k_{3A})}{c_{AL}^2}$$

$$\dot{K}_{VA4} = \frac{-mc_{AL}b_A\beta V_{Cyl}h_1^2 + 2mA_{Cyl}^2 d_b^2 h_2^2 b_{AL}}{2c_{AL}^2 A_{Cyl}K_{PA}h_2 d_b h_1} + \frac{2m^2(k_{3A} - lk_{1A})}{c_{AL}^2} + \qquad (69)$$

$$\frac{mb_{AL}(k_{4A} - lk_{2A})}{c_{AL}^2} + \frac{mb_{AL}^2(lk_{1A} - k_{3A})}{c_{AL}^3}$$

are obtained for the pilot control intensifications $K_{VA0}$ to $K_{VA4}$ of the pilot control block 91.

With equation 69, the pilot control intensifications are now also known which guarantee vibration-free and path-accurate travel of the cage in the direction of rotation based on the idealised model and taking into account the status controller block 93. However, the status controller intensifications $k_{1A}$, $k_{2A}$, $k_{3A}$, $k_{4A}$ are now to be determined. This will be explained below.

The controller feedback 93 is designed as status controller. The controller intensifications are calculated in the same way as in equations 29 to 39 for the axis of rotation.

The components of the status vector $\underline{x}_A$ are weighted with the controller intensifications $k_{iA}$ of the controller matrix $\underline{K}_4$ and fed back to the control input of the path.

As with the axis of rotation, the controller intensifications are determined by coefficient comparison of the polynomials in the same way as in equation 35

$$\det(s\underline{I} - \underline{A}_A + \underline{B}_A \cdot \underline{K}_A) \equiv \prod_{i=1}^{n} (s-r_i) \qquad (69a)$$

As the model of the axis of elevation has the order n = 5, like that of the axis of rotation, the polynomials in equation 69a are also of the fifth order. In the case of the model according to equations 52 to 58, the following linear equation system is produced as a function of the control intensifications $k_{iA}$:

$$\begin{aligned}
a_4(k_{5A}) - p_4 &= 0 \\
a_3(k_{5A}, k_{4A}, k_{2A}) - p_3 &= 0 \\
a_2(k_{5A}, k_{4A}, k_{3A}, k_{1A}) - p_2 &= 0 \\
a_1(k_{5A}, k_{4A}, k_{3A}) - p_1 &= 0 \\
a_0(k_{3A}) - p_0 &= 0
\end{aligned} \qquad (70)$$

wherein $p_i$ ($p_0$ to $p_4$) are the coefficients of the polynomial defined by the zero positions $r_i$.

The $r_i$ are selected in such a way that the system is stable, the control operates sufficiently quickly with good damping and the control variable restriction is not achieved with typically occurring control deviations. The $r_i$ can be determined in simulations in accordance with these criteria prior to commissioning.

Evaluation of the equation system (70) now provides analytical mathematical expressions for the controller intensifications as a function of the desired poles $r_i$ and the system parameters. In the case of model according to equations 52 to 58 the system parameters are $K_{PA}$, $A_{cyl}$, $V_{cyl}$, $\varphi_A$, $\beta$, $J_A$, $m$, $m_K$, $c_{AL}$, $b_{AL}$, $b_A$, $d_b$, $d_a$. A dependence on the parameter 1 is given via the dependence of the parameters $J_A$, $C_{AL}$ on the ladder length. As with the axis of rotation, parameter changes in the system, such as run-out length 1 or the angle of elevation $\varphi_A$, can be taken into account immediately in changed controller intensifications. This is of critical importance for optimised controller behaviour.

As with the axis of rotation, the status controller can also be designed as output feedback. In this case, only the status variables detected by measuring are fed back. There are therefore individual $k_{iA}$ at zero. In the case of the model according to equations 52 to 58, measurement of the drive moment of the hydraulic cylinder can, for example, be dispensed with. Therefore, $k_{5A} = 0$. $k_{1A}$ to $k_{4A}$ can be calculated according to equation (70) despite this. In addition, it may be sensible owing to the not inconsiderable degree of calculation complexity to calculate the controller parameters for a fixed operating point of the system and to ignore the tracking of the controller parameters upon deviation from this operating point as a function of the angle of elevation and of the run-out length. In both cases, however, the actual inherent value position of the system with the controller matrix

$$\underline{K}_A = [k_{1A} \ k_{2A} \ k_{3A} \ k_{4A} \ 0] \qquad (71)$$

must be numerically checked by means of the calculation identical to that in equation 31. As this can only be done numerically, the entire extent covered by the changing system parameters 1 and $\varphi_A$ must be incorporated. These parameters fluctuate in the interval $[l_{min}, l_{max}]$ or $[\varphi_{Amin}, \varphi_{Amax}]$. In these intervals, a plurality of support points $l_i$ and $\varphi_{Aj}$ are selected and the system matrix $\underline{A}_{Aij}$ ($l_i$, $\varphi_{Aj}$) is calculated for all possible combinations of these changing system parameters and inserted in the same way as in equation 31 and evaluated with $\underline{K}_A$ from equation 71:

$$\det(s\underline{I} - \underline{A}_{ij} + \underline{B}_A \cdot \underline{K}_A \equiv 0 \qquad \text{for all } i,j \qquad (72)$$

If all zero points of (72) are always less than zero, the stability of the system is ensured and the originally selected poles $r_i$ can be retained. If this is not the case, then a correction to the poles $r_i$ according to equation (69) may be necessary.

Upon feedback of $w_v$ $\dot{w}_v$ $\varphi_A$ $\dot{\varphi}_A$ the output of the status controller block 93 is then

$$u_{Ajerk} \; = \; k_{1A} \; w_v \; + \; k_{2A} \; \dot{w}_v \; + \; k_{3A} \; \varphi_A \; + \; k_{4D} \; \dot{\varphi}_A \tag{73}$$

By taking into account the pilot control 91, the set control voltage of the proportional valve for the axis of rotation is then similar to equation 40

$$u_{Aref} \; = \; u_{Apilot} \; - \; u_{Ajerk} \tag{74}$$

As with the axis of rotation, optional non-linearities of the hydraulics in block 95 of the hydraulic compensation can be compensated so linear system behaviour in relation to the system input is produced. With the axis of elevation, in addition to the valve play and the hysteresis, correction factors for the control voltage can be provided in relation to the run-out length 1 and the angle of elevation $\varphi_A$ and for the intensification factor $K_{PA}$ and the relevant cylinder diameter $A_{cyl}$. As a result, a direction-dependent structural change-over of the axis controller can be avoided.

To calculate the necessary compensation function, the static characteristic curve between control voltage $u_{StD}$ of the proportional valve and the resulting conveying power $Q_{FD}$ is recorded experimentally, this time also as a function of 1, $\varphi_A$. The characteristic curve can be described by a mathematical function

$$Q_{FA} \; = \; f(u_{StA}, 1, \varphi_A) \tag{75}$$

Linearity is now demanded in relation to the system input. In other words, the proportional valve and the hydraulic compensation block are to have the following transmission behaviour summarised in accordance with equation (47)

$$Q_{FA} \; = \; K_{PA} u_{StA} \tag{76}$$

If the compensation block 95 has the static characteristic curve

$$u_{StA} \; = \; h(u_{Aref}, 1, \varphi_A) \tag{77}$$

then the condition (76) is precisely met when

$$h(u_{Aref}) \; = \; f^{-1}(K_{PA} u_{Aref}, 1, \varphi_A) \tag{78}$$

is chosen as static compensation characteristic curve.

Thus, the individual components of the axis controller for the axis of elevation are described. Consequently, the combination of path planning module and elevation/incline axis controller meet the requirement of a vibration-free and path-accurate movement of the cage during raising and inclining.

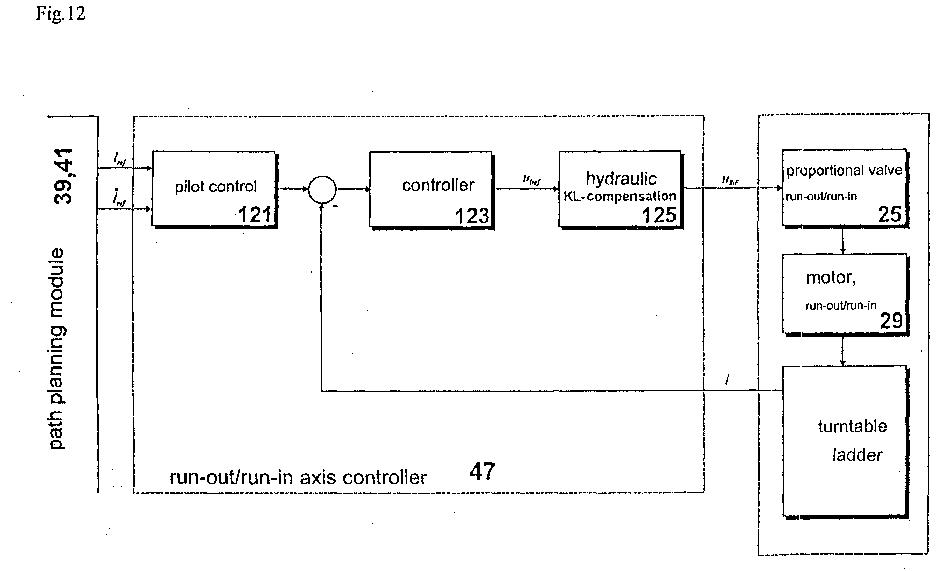

The structure of the axis controller for the axis for extending and retracting the ladder will now be explained below. Fig. 12 shows the structure of the axis controller. In contrast to the rotation 43 and elevation/incline 45 axis controllers, the axis controller of the run-out/run-in axis 47 is equipped with a conventional cascade control with an external control loop for the position and an internal control loop for the velocity as this axis has only a low tendency to vibrate.

Only the time functions set position of the run-out/run-in axis $l_{ref}$ and the set velocity $\dot{l}_{ref}$ are required by the path planning module 39 and 41 to control the axis controller. These are weighted in a pilot control block 121 in such a way that quickly-responding system behaviour results which is accurate in relation to the position when stationary. As the set actual comparison between reference variable $I_{ref}$ and measured variable I takes place directly behind the pilot control block, the steady state in relation to the position is then achieved when the pilot control intensification is for the position 1. The pilot control intensification for the set velocity $\dot{I}_{ref}$ is to be determined such that subjectively quick but well attenuated response behaviour is produced when the hand lever is operated. The controller 123 for the position control loop can be designed as proportional controller (P controller). The control intensification is to be determined according to the criteria stability and sufficient damping of the closed control circuit. The output variable of the controller 123 is the ideal control voltage of the proportional valve. As with the rotation 43 and elevation/incline 45 axis controllers, the non-linearities of the hydraulics are compensated in a compensation block 125. Calculation is made as with the axis of rotation (equations 42 to 44). The output variable is the corrected control voltage of the proportional valve $u_{StE}$. The inner control loop for the velocity is the subordinate conveying power control of the hydraulic circuit.

The last axis of the turntable ladder is the level axis which ensures that even when the vehicle is erected on sloping ground the ladder mechanism always remains horizontal during rotation. In order to detect the vehicle incline, an electrolyte sensor is installed in the turntable ladder mechanism which indicates the degree of tilting of the turntable ladder mechanism in relation to the inertial system in two directions which are perpendicular to one another. These two angles are designated $\varphi_{Nx}$ and $\varphi_{Ny}$. Only the angle $\varphi_{Nx}$ is critical in order to keep the ladder constantly exactly aligned vertically as the second angle of orientation corresponds to the elevation/incline axis. In order to compensate the incline two hydraulic cylinders are mounted between the live ring and turntable ladder mechanism which can tilt the turntable ladder mechanism by an angle $\varphi_{Nrel}$ with respect to the vehicle. The object of the control is to keep the angle $\varphi_{Nx}$ in relation to the inertial system constantly at zero during rotation, in other words to produce parallel alignment in relation to the inertial system. Before the ladder is laid down, it must be brought into vehicle-parallel alignment again. For this purpose, the angle sensors $\varphi_{Nx}$ and $\varphi_{Ny}$ are read out in the laying down state before the ladder is run-out and this value is stored as vehicle incline $\varphi_{FNx}$ and $\varphi_{FNy}$. The value $\varphi_{FNx}$ is therefore the incline of the vehicle about the longitudinal axis, $\varphi_{FNy}$ the incline about the axis transverse to the direction of travel. Before the ladder is laid down, these values are used to bring the ladder into vehicle-parallel alignment again.

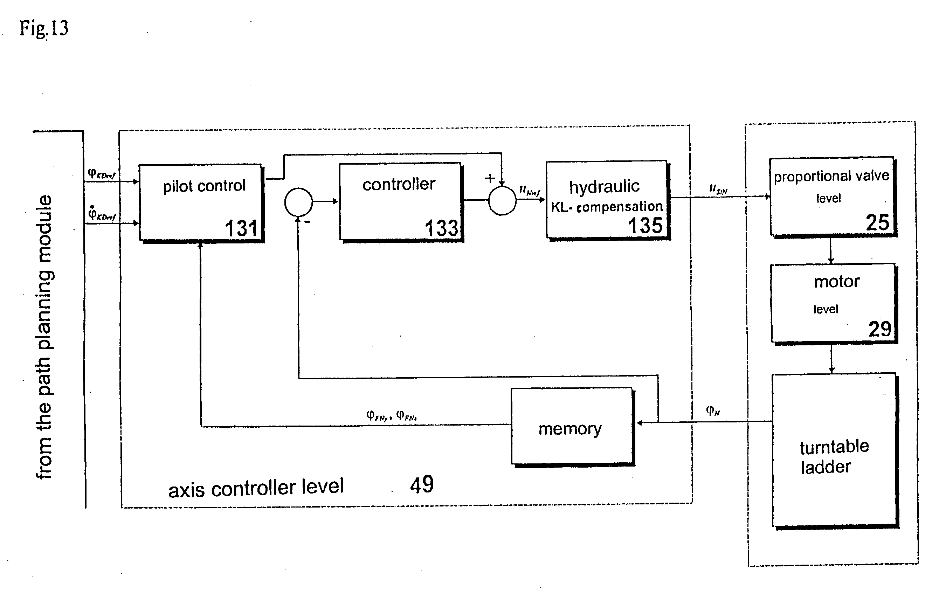

Fig. 13 shows the structure of the axis controller for the level axis. The structure with a cascade controller with an external control loop for the position and an inner control loop for the velocity corresponds to the run-out/run-in axis.

The pilot control 131 is dispensed with in the basic structural stage. During operation of the ladder with active level adjustment, the set value is always assumed to be zero in relation to $\varphi_{Nx}$. The controller 133 converts the set-actual value difference between the current measured value $\varphi_{Nx}$, the set value zero, into a control voltage $u_{Nref}$. The controller is designed as proportional controller. The control intensification is to be determined according to the criteria of stability and sufficient damping of the closed control circuit. The output variable of the controller 133 is the ideal control voltage of the proportional valve. As with the other axis controllers, the non-linearities of the hydraulics are compensated in a compensation block 135. Calculation is made as in the axis of rotation (equations 42 to 44). The output variable is the corrected control voltage of the proportional valve $u_{StN}$. The subordinate conveying power control of the hydraulic circuit is the inner control loop for the velocity.

If the dynamics of the axis controller are to be improved, the axis controller can be supplemented by a pilot control 131. The time functions $\varphi_{KDref}$ and the set velocity $\dot{\varphi}_{KDref}$ of the axis of rotation relevant to the level axis are required in the pilot control by the path planning module. These are initially converted into set values for the angle of tilt $\varphi_{Nrel}$ in the pilot control block 131 in accordance with

$$\varphi_{Nrelset} = -\varphi_{Nx} \cos\varphi_{KDref} - \varphi_{Ny} \sin\varphi_{KDref} \qquad (79)$$

Therefore,

$$\dot{\varphi}_{Nrelset} = (\varphi_{Nx} \sin\varphi_{KDref} - \varphi_{Ny} \cos\varphi_{KDref}) \dot{\varphi}_{KDref} \qquad (80)$$

As a good approximation, it can more simply be assumed for the hydraulic circuit of the level axis that

$$\dot{\varphi}_{Nrel} = K_{PNtot} u_{StN} \qquad (81)$$

wherein, $K_{PNges}$ is the resulting total intensification of the transmission function between tilt velocity $\dot{\varphi}_{Nrel}$ and control

voltage. If

$$u_{StN} = \frac{1}{K_{PN}tot} \, \dot{\varphi}_{Nrelset} \qquad\qquad (82)$$

is now selected the dynamic behaviour is further improved by this pilot control which supplements the controller 133. Before the ladder is laid down, the vehicle angle of tilt $\varphi_{FNx}$ is passed to the set value for the angle of tilt in relation to the inertial system. Therefore, the level axis, in combination with the axis of rotation, ensures that the ladder is always in a horizontal position during rotation at given vehicle incline.

Therefore, a turntable ladder is achieved, the path control of which allows for path-accurate travel of the cage with all axes and suppresses active vibrations of the ladder unit in the process.

**Claims**

1.   Turntable ladder or the like having ladder parts (5) and a cage (3), comprising:

- a control means (31) for the movement of said ladder parts (5) and designed in such a way that when the cage (3) is moved, vibrations of the ladder parts (5) are suppressed and the cage (3) is guided on a preset path, wherein the idealised movement behaviour of the ladder is mapped in a dynamic model based on differential equations, and the control means (31) calculates the control variables of the drives of said ladder parts (5) for a substantially vibration-free movement of the ladder from the dynamic model;
- a path planning module (39 or 41) for producing the movement path of the ladder in a working environment; and
- a pilot control block (71) which controls the drives of said ladder parts (5), said pilot control block (71) receiving measured variables consisting of elevation angle and run-out length of said ladder.

2.   Turntable ladder according to claim 1, **characterised in that** a status controller (73) is provided which compensates vibrations of the ladder unit by weighted feedback of measured variables of angle of elevation and run-out length, with at least one of the measured variables: angle of rotation of the ladder and/or ladder bending in the horizontal vertical direction, suitably weights these and feeds them back to the control inputs of the ladder parts.

3.   Turntable ladder according to claim 1 or 2, **characterised in that** the status controller (73) intensifies the measured values of the measured variables via constant reinforcements.

4.   Turntable ladder according to claim 1 or 2, **characterised in that** the status controller (73) intensifies the measured values of the measured variables with a variable, adaptive intensification.

5.   Turntable ladder according to claim 1 or 2, **characterised in that** a path planning module (39 or 41) for producing the movement path of the ladder in the work environment is provided and emits the movement path in the form of time functions for the cage position, cage velocity, cage acceleration, cage jerk and optionally the derivative of the cage jerk to a pilot control block, which controls the drives of the ladder parts.

6.   Turntable ladder according to claim 5, **characterised in that** the path planning module (39 or 41) allows kinematic restrictions to be input for the time functions for the cage position, cage velocity, cage acceleration and the cage jerk.

7.   Turntable ladder according to claim 6, **characterised in that** the path planning module (39 or 41) also produces the time function for the derivative of the jerk.

8.   Turntable ladder according to claim 6 and 7, **characterised in that** the path planning module (39 or 41) contains steepness limiters (61) for taking the kinematic restrictions into account.

9.   Turntable ladder according to claim 8, **characterised in that** the path planning module (39 or 41) produces constant functions of the jerk and from these determines by integration the time functions for the cage acceleration, cage velocity and cage position.

10. Turntable ladder according to claim 8 or 9, **characterised in that** the path planning module (39 or 41) comprises a further steepness limiter (63) which reduces the after-run of the cage in the event of an emergency stop.

11. Turntable ladder according to one of claims 1 to 10, **characterised in that** the axis controller supplies electrical control signals for controlling hydraulic proportional valves (25) of the ladder drives.

12. Turntable ladder according to claim 11, **characterised in that** the drives for rotating the ladder about the vertical axis are provided for raising and lowering the ladder and for extending and retracting the ladder in its longitudinal direction.

**Patentansprüche**

1. Drehleiter oder dergleichen mit Leiterteilen (5) und einem Korb (3) umfassend:

   - ein Steuerungselement (31) für die Bewegung der Leiterteilte (5), das so gestaltet ist, dass wenn der Korb (3) bewegt wird, Vibrationen der Leiterteile (5) unterdrückt werden und der Korb (3) auf einem vorab eingestellten Weg geführt wird, wobei das idealisierte Bewegungsverhalten der Leiter in einem dynamischen Modell basierend auf Differenzialgleichungen aufgenommen wird und das Steuerungselement (31) die Steuerungsvariablen der Antriebe der Leiterteile (5) für eine im Wesentlichen vibrationsfreie Bewegung der Leiter aus dem dynamischen Modell berechnet;
   - ein Weg-Planmodul (39 oder 41) zur Erzeugung des Bewegungswegs der Leiter in einer Arbeitsumgebung; und
   - einen Pilot-Steuerungsblock (71), der die Antriebe der Leiterteile (5) steuert, wobei der Pilot-Steuerungsblock (71) gemessene Variablen, bestehend aus dem Höhenlagen-Winkel und der Auslauf-Länge der Leiter, misst.

2. Drehleiter gemäß Anspruch 1, **dadurch gekennzeichnet, dass** eine Status-Steuerung (73) zur Verfügung gestellt ist, die Vibrationen der Leitereinheit durch das gewichtete Feedback gemessener Variablen des Höhenlagen-Winkels und der Auslauf-Länge mit zumindest einer der gemessenen Variablen aus Drehwinkel der Leiter und/oder Leiter-Biegung in horizontaler/vertikaler Richtung kompensiert, wobei diese Variablen geeignet gewichtet werden und zu den Steuerungs-Eingaben der Leiterteile zurückgeführt werden.

3. Drehleiter gemäß Anspruch 1 oder 2, **dadurch gekennzeichnet, dass** die Status-Steuerung (73) die gemessenen Werte der gemessenen Variablen über konstante Verstärkungen intensiviert.

4. Drehleiter gemäß Anspruch 1 oder 2, **dadurch gekennzeichnet, dass** die Status-Steuerung (73) die gemessenen Werte der gemessenen Variablen mit einer variablen, adaptiven Verstärkung intensiviert.

5. Drehleiter gemäß Anspruch 1 oder 2, **dadurch gekennzeichnet, dass** ein Weg-Planmodul (39 oder 41) zur Erzeugung des Bewegungswegs der Leiter im Arbeitsumfeld zur Verfügung gestellt ist und den Bewegungsweg in der Form vom Zeitfunktionen für die Korbposition, die Korbgeschwindigkeit, die Korbbeschleunigung, die Korberschütterung und optional die Ableitung der Korberschütterung zu einem Pilot-Steuerungsblock, der die Antriebe der Leiterteile steuert, ausgibt.

6. Drehleiter gemäß Anspruch 5, **dadurch gekennzeichnet, dass** das Weg-Planmodul (39 oder 41) die Eingabe von kinematischen Beschränkungen für die Zeitfunktionen der Korbposition, der Korbgeschwindigkeit, der Korbbeschleunigung und der Korberschütterung ermöglicht.

7. Drehleiter gemäß Anspruch 6, **dadurch gekennzeichnet, dass** das Weg-Planmodul (39 oder 41) ebenso die Zeitfunktion für die Ableitung der Erschütterung produziert.

8. Drehleiter gemäß Anspruch 6 und 7, **dadurch gekennzeichnet, dass** das Weg-Planmodul (39 oder 41) Steilheits-Begrenzer (61) zur Beachtung kinematischer Beschränkungen enthält.

9. Drehleiter gemäß Anspruch 8, **dadurch gekennzeichnet, dass** das Weg-Planmodul (39 oder 41) konstante Funktionen der Erschütterung produziert und aus diesen durch Integration der Zeitfunktionen für die Korbbeschleunigung, die Korbgeschwindigkeit und die Korbposition bestimmt.

10. Drehleiter gemäß Anspruch 8 oder 9, **dadurch gekennzeichnet, dass** das Weg-Planmodul (39 oder 41) einen weiteren Steilheits-Begrenzer (63) umfasst, der das Nachlaufen des Korbs im Falle eines Notstopps reduziert.

11. Drehleiter gemäß einem der Ansprüche 1 bis 10, **dadurch gekennzeichnet, dass** die Achsen-Steuerung elektrische Steuerungssignale zum Steuern hydraulischer Proportionalventile (25) der Leiterantriebe befördert.

12. Drehleiter gemäß Anspruch 11, **dadurch gekennzeichnet, dass** die Antriebe zur Drehung der Leiter um die vertikale Achse, zum Anheben und Absenken der Leiter und zum Verlängern und Zurückführen der Leiter in ihrer Längsrichtung zur Verfügung gestellt sind.

## Revendications

1. Echelle orientable ou similaire comportant des parties d'échelle (5) et une cage (3), comprenant :

   - un moyen de commande (31) pour le déplacement desdites parties d'échelle (5) et conçu de telle façon que lorsque la cage (3) est déplacée, les vibrations des parties d'échelle (5) sont supprimées et la cage (3) est guidée sur un chemin préétabli, dans lequel le mouvement idéal de l'échelle est schématisé dans un modèle dynamique basé sur des équations différentielles, et le moyen de commande (31) calcule les variables de commande des entraîneurs desdites parties d'échelle (5) pour un déplacement substantiellement sans vibration de l'échelle à partir du modèle dynamique ;
   - un module de planification du chemin (39 ou 41) destiné à produire le chemin de déplacement de l'échelle dans un environnement de travail ; et
   - un bloc de commande de pilotage (71) qui commande les entraîneurs desdits éléments d'échelle (5), ledit bloc de commande de pilotage (71) recevant des variables issues de mesures composées de l'angle d'élévation et la longueur de déploiement de ladite échelle.

2. Echelle orientable selon la revendication 1, **caractérisée en ce qu'**il est fourni un dispositif de commande de statut (73), lequel compense les vibrations de l'unité d'échelle par une rétroaction pondérée de variables mesurées pour l'angle d'élévation et la longueur de déploiement, avec au moins l'une des variables mesurées : angle de rotation de l'échelle et/ou inclinaison de l'échelle dans la direction horizontale verticale, pondérant celles-ci de façon adéquate et les renvoyant aux entrées de commande des éléments d'échelle.

3. Echelle orientable selon les revendications 1 ou 2, **caractérisée en ce que** le dispositif de commande de statut (73) augmente les valeurs mesurées des variables mesurées par des facteurs de renforcement constants.

4. Echelle orientable selon les revendications 1 ou 2, **caractérisée en ce que** le dispositif de commande de statut (73) augmente les valeurs mesurées des variables mesurées par une augmentation variable, adaptative.

5. Echelle orientable selon la revendication 1 ou 2, **caractérisée en ce qu'**il est fourni un module de planification du chemin (39 ou 41) destiné à la production du chemin de déplacement de l'échelle dans l'environnement de travail et lance le chemin de déplacement sous la forme de fonctions du temps pour la position de la cage, la vitesse de la cage, l'accélération de la cage, la saccade de la cage et optionnellement la dérivée de la saccade de la cage à un bloc de commande pilote, qui commande les entraîneurs d'éléments d'échelle.

6. Echelle orientable selon la revendication 5, **caractérisée en ce que** le module de planification du chemin (39 ou 41) permet que des restrictions cinématiques soient rentrées pour les fonctions du temps de la position de la cage, de la vitesse de la cage, de l'accélération de la cage et la saccade de la cage.

7. Echelle orientable selon la revendication 6, **caractérisée en ce que** le module de planification du chemin (39 ou 41) produit également la fonction du temps pour la dérivée de la saccade.

8. Echelle orientable selon les revendications 6 et 7, **caractérisée en ce que** le module de planification du chemin (39 ou 41) contient des limiteurs de l'inclinaison (61) pour que les restrictions cinématiques soient prises en compte.

9. Echelle orientable selon la revendication 8, **caractérisée en ce que** le module de planification du chemin (39 ou 41) produit des fonctions constantes de la saccade et **en ce qu'**à partir de ces dernières il détermine par intégration les fonctions du temps pour l'accélération de la cage, la vitesse de la cage et la position de la cage.

**10.** Echelle orientable selon les revendications 8 ou 9, **caractérisée en ce que** le module de détermination du chemin (39 ou 41) comprend un limiteur de l'inclinaison supplémentaire (63) qui réduit la course résiduelle de la cage dans le cas d'un arrêt d'urgence.

**11.** Echelle orientable selon l'une des revendications 1 à 10, **caractérisée en ce que** le contrôleur d'axe fournit des signaux électriques de commande pour la commande hydraulique proportionnelle des soupapes (25) des entraîneurs d'échelle.

**12.** Echelle orientable selon la revendication 11, **caractérisée en ce que** les entraîneurs destinés à faire pivoter l'échelle autour de l'axe vertical sont fournis pour lever et abaisser l'échelle et pour allonger et rétracter l'échelle dans sa direction longitudinale.

Fig.1

cage's centre of gravity

ladder unit
5

run-out/run-in axis
9    (*l*)

cage
3

ladder mechanism
15

elevation/incline axis

$\varphi_D$

angle of elevation $\varphi_A$

7    $\left(\varphi_A\right)$

angle of rotation $\varphi_D$

$\varphi_A$

axis of rotation $\left(\varphi_D\right)$
11

level axis
13    $\left(\varphi_N\right)$

vehicle
1

EP 1 138 867 B1

Fig.2

operator

hand lever

set

path control

31

$w_v$

$w_h$

$l$

$\varphi_A$

$\varphi_D$

$\varphi_N$

hydraulic control

$u_{SiD}$   $u_{SiA}$   $u_{SiE}$   $u_{SiN}$

pump

$Q_{FD}$

$\Delta p_D$

proportional valve
rotation  25

Motor
rotation  27

$Q_{FA}$

$\Delta p_A$

proportional valve
elevation/incline 25

cylinder
elevation/incline 29

$Q_{FE}$

$\Delta p_E$

proportional valve
run-out/run-in  25

Motor
run-out/run-in 27

$Q_{FN}$

$\Delta p_N$

proportional valve
level  25

cylinder
level 29

turntable ladder

Fig.3

**operator 33**

hand lever operating panel 35

$\dot{q}_{target}$

set 37

$q_{target}$

**path control 31**

path planning module 39
fully automatic
41
semi-automatic

$\varphi_{KDref}$ → axis controller rotation 43 → $u_{StD}$ → rotate ladder ← $\varphi_D$ $W_h$

$\varphi_{KAref}$ → axis controller elevation/incline 45 → $u_{StA}$ → elevate incline ladder ← $\varphi_A$ $W_v$

$l_{ref}$ → axis controller run-out/run-in 47 → $u_{StE}$ → run ladder out/in ← $l$

$\varphi_{KDref}$ → axis controller level 49 → $u_{StN}$ → tilt ladder ← $\varphi_N$

**turntable ladder**

EP 1 138 867 B1

33

Fig.4

$$\varphi_{KDref} \left( \begin{array}{c} \dot{\varphi}_{KDref} \\ \dot{\varphi}_{KAref} \\ \dot{i}_{ref} \end{array} \right)$$

$$\varphi_{KAref}$$

$$i_{ref}$$

path planning module

39,41

$\varphi_{KAref}$

$\dot{\varphi}_{KAref}$

$\ddot{\varphi}_{KAref}$

$\dddot{\varphi}_{KAref}$

$\ddddot{\varphi}_{KAref}$

Fig.5

$\varphi_{KDref}, \varphi_{KAref}$ in degrees

$\varphi_{DZiel}$

$\varphi_{DStart}, \varphi_{AStart}$

$\varphi_{AZiel}$

$t$ in s

$\dot\varphi_{KDref}, \dot\varphi_{KAref}$ in rad/s

I   II   III

$\dot\varphi_{Dmax}$

$\dot\varphi_{Amax}$

$t$ in s

$\ddot\varphi_{KDref}, \ddot\varphi_{KAref}$ in rad/s$^2$

I   II   III

$\ddot\varphi_{Dmax}, \ddot\varphi_{Amax}$

$-\ddot\varphi_{Dmax}, -\ddot\varphi_{Amax}$

$t$ in s

$\dddot\varphi_{KDref}, \dddot\varphi_{KAref}$ in rad/s$^3$

I   II   III

$\dddot\varphi_{Dmax}, \dddot\varphi_{Amax}$

$-\dddot\varphi_{Dmax}, -\dddot\varphi_{Amax}$

$t$ in s

EP 1 138 867 B1

35

Fig.6

Fig.7

EP 1 138 867 B1

path planning module **39,41**

$\varphi_{Dref}$
$\dot{\varphi}_{Dref}$
$\ddot{\varphi}_{Dref}$
$\dddot{\varphi}_{Dref}$
$\ddddot{\varphi}_{Dref}$

pilot control
71

$\Sigma$
−

hydraulic
compensation
75

proportional valve
rotation axis
25

Motor
axis controller
29

turntable
ladder

$\varphi_A$

1

status
controller
73

$\varphi_D$
$\dot{\varphi}_D$
$w_A$
$\dot{w}_A$

rotation axis controller **43**

Fig.8

mass $m_K$

$-W_n$

$\varphi_A$

$\varphi_{KD}$

$\varphi_D$

81

$M_{MD}$

$\vec{c}_{I3}$

$\vec{c}_{I2}$

$\vec{c}_{I1}$

vehicle

EP 1 138 867 B1

Fig.9

Fig.10

cage

$-W_V$

ladder length $\ell$

ladder unit

$\varphi_{K\Lambda}$

$\varphi_{\Lambda}$

vehicle

Fig.11

Fig.12

```
                              run-out/run-in axis controller    47

   ┌──────────┐      ┌──────────┐   n_inf   ┌─────────────┐  n_sf
   │  pilot   │      │          │──────────▶│  hydraulic  │─────▶
   │ control  │      │controller│           │KL-compensation│
   │   121    │──▶ ⊖ │   123    │           │     125     │
   └──────────┘   ▲  └──────────┘           └─────────────┘
      ▲  ▲        │ ─
      │  │        └──────────────────────────┐
  I_inf  i_inf                               │
```

proportional valve
run-out/run-in
**25**

motor,
run-out/run-in
**29**

turntable
ladder

path planning module **39,41**

...

Fig.13